(19) Europäisches Patentamt
European Patent Office
Office européen des brevets

(11) **EP 4 290 637 A1**

(12) **EUROPEAN PATENT APPLICATION**

(43) Date of publication:
**13.12.2023 Bulletin 2023/50**

(21) Application number: **22305821.5**

(22) Date of filing: **07.06.2022**

(51) International Patent Classification (IPC):
***H01M 10/0567*** *(2010.01)* ***H01M 10/42*** *(2006.01)*
***H01M 12/08*** *(2006.01)*

(52) Cooperative Patent Classification (CPC):
**H01M 10/0567; H01M 10/4235; H01M 12/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **TOYOTA JIDOSHA KABUSHIKI KAISHA**
  **Toyota-shi, Aichi-ken, 471-8571 (JP)**
- **Centre national de la recherche scientifique**
  **75016 Paris (FR)**

(72) Inventors:
- **CASTRO, Laurent**
  **1140 BRUSSELS (BE)**
- **POIZOT, Philippe**
  **44300 NANTES (FR)**
- **RENAULT, Stéven**
  **44300 NANTES (FR)**
- **ADABA, Yao**
  **44300 NANTES (FR)**
- **JOUHARA, Alia**
  **79500 SAINT VINCENT LA CHÂTRE (FR)**

(74) Representative: **Cabinet Beau de Loménie**
**158, rue de l'Université**
**75340 Paris Cedex 07 (FR)**

(54) **METAL M-AIR BATTERY CELL COMPRISING AN ORGANIC MULTI REDOX MEDIATOR COMPOUND AS SOLUBLE ORGANIC CATALYST**

(57) The present invention relates to a metal M-air ($O_2$) battery cell comprising a non-aqueous electrolyte medium with an Organic Multi Redox Mediator (OMRM) compound comprising at least two different reversible Organic Redox Mediator Center terminations ORMC1• and ORMC2, as a soluble organic catalyst. The invention also concerns a method for preparing such a compound and the use of such a compound as a soluble organic catalyst in a metal M-air battery cell. The invention also concerns a battery pack comprising at least two metal M-air battery cells according to the invention. The use of a battery pack according to the invention as a rechargeable battery for electric vehicles and hybrid vehicles, electronic devices, and stationary power generating devices, is also part of the invention. Finally, the invention is directed at a vehicle, an electronic device, and a stationary power generating device, and preferably devices related to mobility such as cars, bikes, scooters and drones, comprising a battery pack according to the invention.

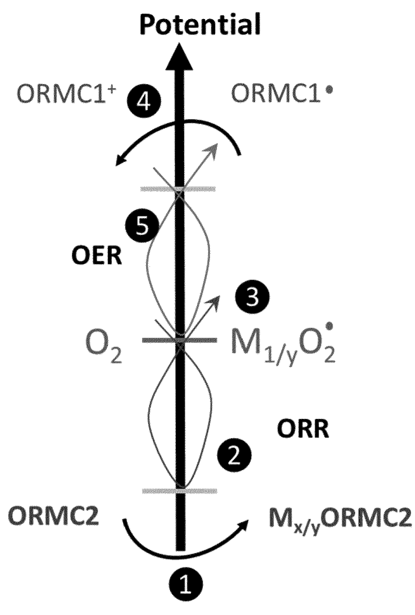


Figure 1

EP 4 290 637 A1

## Description

Field of the invention

The present invention relates to a metal M-air ($O_2$) battery cell comprising a non-aqueous electrolyte medium with an Organic Multi Redox Mediator (OMRM) compound comprising at least two different reversible Organic Redox Mediator Center terminations ORMC1• and ORMC2, as a soluble organic catalyst. The invention also concerns a method for preparing such a compound and the use of such a compound as a soluble organic catalyst in a metal M-air battery cell. The invention also aims at a battery pack comprising at least two metal M-air battery cells according to the invention. The use of a battery pack according to the invention as a rechargeable battery for electric vehicles and hybrid vehicles, electronic devices, and stationary power generating devices, is also part of the invention. Finally, the invention is directed at a vehicle, an electronic device, and a stationary power generating device, comprising a battery pack according to the invention.

Background to the invention

Rechargeable batteries are of considerable interest due to their high energy density and high power, in particular for vehicles or stationary applications.

Recently, metal M-air batteries have become important due to advances in materials technology and an increasing demand for renewable energy sources. In particular, rechargeable lithium-air batteries have attracted attention for electric vehicles and hybrid vehicles, where high energy density is required. Lithium-air batteries can also be used in various devices, in automotive or stationary applications, and can be assembled in battery packs.

Rechargeable lithium-air batteries use oxygen in the air as a cathode active material. Therefore, compared to conventional lithium rechargeable batteries containing a transition metal oxide (e.g. lithium cobaltate), as a cathode active material, rechargeable lithium-air batteries are able to have larger capacity as much as the specific surface of carbon paper used as current collector allowed.

In metal M-air batteries, the cathode active material, oxygen, is not contained within the battery. Instead, this material is provided by the surrounding atmosphere. Naturally, such a system allows in principle a very high specific energy (energy provided by the battery per unit weight, typically given in Wh/kg in this technical field). In such batteries, oxygen may be partially reduced to peroxide, or fully reduced to hydroxide or oxide depending on the catalyst, electrolyte, availability of oxygen, etc. Especially, in lithium-air batteries, when the negative electrode (anode) is $LiFePO_4$ (LFP) or lithium (Li) metal, lithium peroxide ($Li_2O_2$) or lithium oxide ($Li_2O$) may be formed at the surface of the air cathode/current collector.

A metal M-air battery cell contains in general the following parts:

- a metal anode (e.g. containing a metal M),
- a non-aqueous electrolyte (e.g. containing a metal M salt), and
- an air cathode.

Other parts of the battery device may be present such as: current collectors on the anode and/or cathode side; a separator between the cathode-side electrolyte (catholyte) and anode-side electrolyte (anolyte); a barrier layer between a positive electrode (cathode) and electrolyte, or between a negative electrode (anode) and electrolyte.

EP 2 495 803 A1 discloses a lithium-air battery capable of being used for a long time with little deterioration in which oxygen supply to a porous cathode is not inhibited by an air electrode current collector. No mention is made of the presence of an additive or catalyst in the electrolyte.

KR 2019/0123075 A discloses a metal oxygen battery comprising an electrolyte solution containing a solvent, a metal salt, a liquid catalyst such as dimethylphenazine (DMPZ) and tetramethylpiperidinyloxyl (TEMPO), and a singlet oxygen quencher. The catalyst and the singlet oxygen quencher are on two distinct compounds.

US 10,497,976 B2 describes a lithium-air battery including an electrolyte with a donor number of 10 to 40, and a quinone-based liquid catalyst which added to the electrolyte to induce a discharge in the solution. Association with a free radical as catalyst for charge (OER) is not envisaged.

Among known electrolytes for metal M-air batteries, the following problems need to be addressed:

- simplify the electrolyte formulation by using one single compound instead of several compounds,
- decrease the charge (OER) potential,
- increase the discharge (ORR) potential,
- increase the capacity during the charge (OER),
- increase the capacity during the discharge (ORR).

Summary of the invention

In order to remedy problems associated with known electrolytes for metal M-air battery cells, the present invention proposes a metal M-air battery cell comprising:

- a negative electrode containing a negative-electrode active material,
- a positive electrode using oxygen as a positive-electrode active material, and
- a non-aqueous electrolyte medium arranged between the negative electrode and the positive electrode and comprising a metal M salt,

wherein the non-aqueous electrolyte medium comprises an Organic Multi Redox Mediator (OMRM) compound comprising at least two different reversible Organic Redox Mediator Center terminations ORMC1$^{\bullet}$ and ORMC2, the OMRM compound of the invention providing:

- lower hysteresis by decreasing charging voltage and/or increasing discharge voltage of the metal M-air battery cell by improving the reaction rate during charge and discharge, since degradation of the electrolyte is avoided when used under limiting capacity mode,
- lower polarization and increase capacity ($mAh/cm^2$) of the metal M-air battery cell at a fixed rate ($mA/cm^2$) applied to the metal M-air battery cell,
- simplification of the electrolyte formulation for metal M-air battery cells by decreasing the number of components.

The OMRM compound of the invention has the main advantage to deal with only one molecule for supporting both charge and discharge mechanisms in metal M-air battery cells instead of two different ones, therefore decreasing the complexity of the elaboration of the electrolyte for metal M-air battery cells.

In the OMRM compound of the invention, the attachment of the ORMC1$^{\bullet}$ part to the ORMC2 part on one single compound via linker(s) makes it possible to have an activity on the ORR and the OER, when it is not the case when each parts ORMC1$^{\bullet}$ and ORMC2 are alone. The experimental results presented in the examples clearly show this catalytic effect.

The OMRM compound of the invention acts as an organic catalyst and enhances the electrochemical performances of the reaction involving oxygen, especially Oxygen Reduction Reaction (ORR) during discharge and Oxygen Evolution Reaction (OER) during charge.

The charge (OER) and discharge (ORR) mechanisms involved by the OMRM compound of the invention are both based on two steps.

The scheme below illustrates the effect of an ORMC2 catalyst on the mechanism of discharge (ORR) by the facilitation of $M_2O_2$ formation during the discharge of battery:

(1) $ORMC2 + x\,e^- + x/y\,M^{y+} \rightarrow ORMC2\text{-}M_{x/y}$
(2) $1/x\,ORMC2\text{-}M_{x/y} + O_2 \rightarrow 1/x\,ORMC2 + M_{1/y}O_2^{\bullet}$
(3) $2\,M_{1/y}O_2^{\bullet} \rightarrow M_{2/y}O_2 + O_2$

The scheme below illustrates the effect of an ORMC1$^{\bullet}$ catalyst on the mechanism of charge (OER) by the facilitation of $M_2O_2$ decomposition during the charge of battery:

(4) $ORMC1^{\bullet} - e^- \rightarrow ORMC1^+$
(5) $ORMC1^+ + M_{2/y}O_2 \rightarrow 2ORMC1^{\bullet} + 2/yM^{y+} + O_2$

The mechanisms of the OMRM compound of the invention during charge (OER) and discharge (ORR) of M-$O_2$ cell is represented on **Figure 1.**

The OMRM compound of the invention has the specificity to contain:

- at least two different reversible redox center terminations ORMC1$^{\bullet}$ and ORMC2 used for catalysing ORR (discharge) and OER (charge) for metal M-air battery cells,
- at least one redox center termination having n type properties able to catalyse/enhance ORR (discharge) and at least one redox center termination having p type properties able to catalyse/enhance OER, the simultaneous n and p type properties allowing to catalyse/enhance oxygen reactions, i.e. catalyse the formation of $M_{2/y}O_2$ and the decomposition of $M_{2/y}O_2$ into $O_2$,
- at least one ORMC1$^{\bullet}$ termination providing good redox media for OER,
- at least one ORMC2 termination providing good redox media for ORR,

- at least one linker between the ORMC1• part and the ORMC2 part to form a single compound and simplify the formulation of the electrolyte, and
- possibly functional groups allowing to tune the electrochemical potential of the compound (to be tuned depending on the battery applications) and/or to increase the conjugation, and therefore the electronic transport within the compound.

In one aspect, the present invention relates to an OMRM compound of formula (1) comprising at least two different reversible Organic Redox Mediator Center terminations ORMC1• and ORMC2.

In another aspect, the present invention relates to a specific method for preparing an OMRM compound of formula (1) according to the invention.

The invention also relates to the use of an OMRM compound of formula (1) according to the invention as a soluble organic catalyst in a metal M-air battery cell.

The invention also relates to a battery pack comprising at least two assembled metal M-air battery cells according to the invention.

In another aspect, the invention relates to the use of a battery pack according to the invention as a rechargeable battery for electric vehicles and hybrid vehicles, electronic devices, and stationary power generating devices, and preferably devices related to mobility such as cars, bikes, scooters and drones.

Finally, the invention aims at a vehicle, an electronic device, and a stationary power generating device, comprising a battery pack according to the invention.

## Brief description of the Figures

**Figure 1** shows the mechanisms of the OMRM compound of the invention during charge (OER) and discharge (ORR) of M-$O_2$ cell.

**Figure 2** compares CV obtained at 10 mV/s under argon and under oxygen with electrolyte a) used in CE1 cell and electrolyte g) used in E1 cell in the examples.

**Figure 3** compares CV obtained at 10mV/s under argon and under oxygen with electrolyte a) used in CE1 cell and electrolyte h) used in E2 cell in the examples.

**Figure 4** compares galvanostatic charge and discharge at 0.2 $mA.cm^{-2}$ obtained for CE1 cell and E1 in the examples.

**Figure 5** compares galvanostatic charge and discharge at 0.2 $mA.cm^{-2}$ obtained for CE1 cell and E2 in the examples.

**Figure 6** shows the capacity retention versus cycle number from CE1 cell at 0.2 $mA.cm^{-2}$ rate.

**Figure 7** shows the capacity retention versus cycle number from CE2 cell at 0.2 $mA.cm^{-2}$ rate.

**Figure 8** shows the capacity retention versus cycle number from CE3 cell at 0.2 $mA.cm^{-2}$ rate.

**Figure 9** shows the capacity retention versus cycle number from CE4 cell at 0.2 $mA.cm^{-2}$ rate.

**Figure 10** shows the capacity retention versus cycle number from CE5 cell at 0.2 $mA.cm^{-2}$ rate.

**Figure 11** shows the capacity retention versus cycle number from CE6 cell at 0.2 $mA.cm^{-2}$ rate.

**Figure 12** shows the capacity retention versus cycle number from E1 cell at 0.2 $mA.cm^{-2}$ rate.

**Figure 13** shows the capacity retention versus cycle number from E2 cell at 0.2 $mA.cm^{-2}$ rate.

## Detailed description of the invention

The present invention relates to a metal M-air battery cell comprising:

- a negative electrode containing a negative-electrode active material,
- a positive electrode using oxygen as a positive-electrode active material, and
- a non-aqueous electrolyte medium arranged between the negative electrode and the positive electrode and comprising a metal M salt,

wherein the non-aqueous electrolyte medium comprises an OMRM compound of formula (1) comprising at least two different reversible Organic Redox Mediator Center terminations ORMC1• and ORMC2 connected together via linkers L1 and L2:

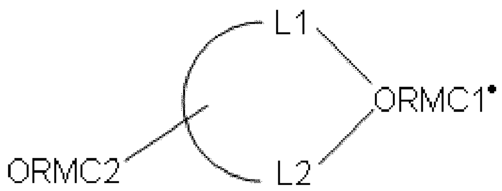

(1)

wherein:

- ORMC1$^{\bullet}$ is at least one, and preferably one, redox active functional group which can reversibly react in a -0.08 - 1.5 V range vs standard hydrogen electrode (SHE), and preferably in a 3 - 4.5 V range vs $Li^+/Li^0$,
- ORMC2 is at least one, and preferably one, redox active functional group which can reversibly react in a -1 - -0.08 V range vs standard hydrogen electrode (SHE), and preferably in a 2 - 3 V range vs $Li^+/Li^0$, and
- the linkers L1 and L2, identical or different, are linear or branched $C_{1-12}$ alkyl chains or wherein one (and only one) of the linkers L1 or L2 is a single bond, the linear or branched $C_{1-12}$ alkyl chain being optionally substituted by a substituent, allowing to tune the electrochemical potential and/or allowing to increase the conjugation of the compound, selected from the group consisting of F, Cl, Br, I, OH, =O (a ketone function), COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, -(O=)CHNR, - HN(O=)CR, -(O=)COR, -HN(O=)CHNR, -HN(O=)COR, -(HN=)CHNR, - HN(NH=)CHNR, -(S=)CHNR, -HN(S=)CHNR, with R being H or a linear or branched $C_{1-20}$ alkyl radical, or

  the linkers L1 and L2 form together an alicyclic or aromatic $C_{3-10}$ ring-closed cycle with only one point of attachment with ORMC2, said point of attachment being a single bond or a linear or branched $C_{1-20}$ alkyl chain, the $C_{3-10}$ ring-closed cycle and/or the linear or branched $C_{1-20}$ alkyl chain between the $C_{3-10}$ ring-closed cycle and ORMC2 being optionally substituted by a substituent, allowing to tune the electrochemical potential and/or allowing to increase the conjugation of the compound, selected from the group consisting of F, Cl, Br, I, OH, =O (a ketone function), COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, - (O=)CHNR, -HN(O=)CR, -(O=)COR, -HN(O=)CHNR, -HN(O=)COR, - (HN=)CHNR, -HN(HN=)CHNR, -(S=)CHNR, -HN(S=)CHNR, with R being H or a linear or branched $C_{1-20}$ alkyl radical, and

  the linkers L1 and L2 optionally containing heteroatoms within their chains, preferably O, N, S, P atoms.

In the sense of the invention, the standard hydrogen electrode (SHE) is a redox electrode which forms the basis of the thermodynamic scale of oxidation-reduction potentials. Its absolute electrode potential is estimated to be 4.44 $\pm$ 0.02 V at 25°C, but to form a basis for comparison with all other electro-reactions, hydrogen's standard electrode potential (E) is declared to be zero volts at any temperature. Potentials of any other electrodes are compared with that of the standard hydrogen electrode at the same temperature.

In the sense of the invention, the following terms mean:

- Alkyl: a saturated, linear or branched, $C_1$-$C_{20}$, preferably $C_1$-$C_{12}$, more preferably $C_1$-$C_6$, and even more preferably $C_1$-$C_4$, hydrocarbon-based aliphatic group. The term "branched" means that at least one lower alkyl group such as methyl or ethyl is carried by a linear alkyl chain. As the alkyl group, there may be mentioned, for example, methyl, ethyl, *n*-propyl, *i*-propyl, *n*-butyl, *t*-butyl, *i*-butyl, s-butyl and *n*-pentyl.Aryl: any functional group or substituent derived from at least one aromatic ring; an aromatic ring corresponds to any planar mono- or polycyclic group comprising a delocalized $\pi$-system in which each atom of the cycle comprises a p-orbital, said p-orbital overlapping each other; among such aryl groups there may be mentioned phenyl, biphenyl, naphthalene and anthracene groups. The aryl groups of the invention preferably comprise from 4 to 20 carbon atoms, even preferably from 4 to 12 carbon atoms, and even more preferably from 5 to 6 carbon atoms.
- Alkenyl: a linear or branched, $C_1$-$C_{20}$, preferably $C_1$-$C_{12}$, more preferably $C_1$-$C_6$, and even more preferably $C_1$-$C_4$, unsaturated hydrocarbon-based aliphatic group that contains at least one carbon-carbon double bond. The term "branched" means that at least one lower alkyl group such as methyl or ethyl is carried by a linear alkenyl chain.Alkaryl: any group derived from an alkyl group as defined above wherein a hydrogen atom is replaced by an aryl as defined

above. The alkaryl preferably comprises from 5 to 20 carbon atoms, and more preferably from 5 to 12 carbon atoms.

- Alkoxy: a saturated, linear or branched, $C_1$-$C_{20}$, preferably $C_1$-$C_{12}$, more preferably $C_1$-$C_6$, and even more preferably $C_1$-$C_4$, hydrocarbon-based aliphatic group containing an oxygen atom. As the alkyl group, there may be mentioned, for example, methyloxy, ethyloxy, *n*-propyloxy, *iso*-propyloxy, *n*-butyloxy, sec-butyloxy, *tert*-butyloxy and *iso*-butyloxy radicals.

- Aryloxy: any aryl radical linked to an oxygen atom, preferably comprising from 4 to 20 carbon atoms, and more preferably from 4 to 12 carbon atoms. As the aryloxy group, it may be mentioned, for example, phenoxy radical.
- Amino-alkyl: a saturated, linear or branched, $C_1$-$C_{20}$, preferably $C_1$-$C_{12}$, more preferably $C_1$-$C_6$, and even more preferably $C_1$-$C_4$, hydrocarbon-based aliphatic group bearing an amino group, and preferably a primary amino group $-NH_2$.
- Amino-aryl: any aryl radical linked to an amino group, and preferably a primary amino group $-NH_2$, preferably comprising from 4 to 20 carbon atoms, and more preferably from 4 to 12 carbon atoms.
- Thio-alkyl: a saturated, linear or branched, $C_1$-$C_{20}$, preferably $C_1$-$C_{12}$, more preferably $C_1$-$C_6$, and even more preferably $C_1$-$C_4$, hydrocarbon-based aliphatic group bearing a thiol group -SH.
- Thio-aryl: any aryl radical linked to a thiol group -SH, preferably comprising from 4 to 20 carbon atoms, and more preferably from 4 to 12 carbon atoms.
- Alkyl phosphonate: any alkyl radical linked to a phosphonic group $-P(=O)(OR'')_2$ wherein R" is a saturated, linear or branched, $C_1$-$C_{20}$, preferably $C_1$-$C_{12}$, more preferably $C_1$-$C_6$, and even more preferably $C_1$-$C_4$, hydrocarbon-based aliphatic group.
- Aryl phosphonate: any aryl radical linked to a phosphonate group $-P(=O)(OR'')_2$ wherein R" is saturated, linear or branched, $C_1$-$C_{20}$, preferably $C_1$-$C_{12}$, more preferably $C_1$-$C_6$, and even more preferably $C_1$-$C_4$, hydrocarbon-based aliphatic group.
- Cyclodienyl: any unsaturated cyclic radical containing at least two carbon-carbon double bonds, and preferably comprising from 5 to 20 carbon atoms, and more preferably from 5 to 12 carbon atoms.
- Alicyclic ring-closed cycle: any saturated cyclic radical containing at least two carbon-carbon single bonds comprising from 3 to 10 carbon atoms, preferably from 3 to 6 carbon atoms, and more preferably from 4 to 6 carbon atoms.
- Aromatic ring-closed cycle: any unsaturated cyclic functional group or substituent derived from at least one aromatic ring as defined above comprising from 3 to 10 carbon atoms, preferably from 3 to 6 carbon atoms, and more preferably from 4 to 6 carbon atoms.
- Quinone: a class of organic compounds that are derived from aromatic compounds (such as benzene or naphthalene) by conversion of an even number of -CH= groups into -C(=O)- groups (cyclic conjugated ethylene diketones). The main quinones are: benzoquinone, naphthoquinone, anthraquinone.

In a preferred embodiment, in the OMRM compound of formula (1), ORMC1$^\bullet$ is a free radical selected from the group consisting of -O$^\bullet$, -NO$^\bullet$, -S$^\bullet$, - N$^\bullet$. In a particularly preferred embodiment, ORMC1$^\bullet$ is -NO$^\bullet$.

Aromatic compounds of formula (1) have already been described in the prior art, but not as organic soluble catalysts for metal M-air battery cells (S. Nakatsuji et al., Mol. Cryst. Liq. Cryst. 1996, Vol. 279, pp. 73-76; M. Nobusawa et al., Letters in Organic Chemistry, 2006, 3, 685-688; S. Nakatsuji et al., J. Org. Chem. 2009, 74, 9345-9350).

In a preferred embodiment, in the OMRM compound of formula (1), ORMC2 is selected from the group consisting of quinone, -CN, -(O=)CR, - (S=)CR, -(N=)CR, -N=CRR', -(O=)SR, in which R and R', identical or different, are H or a linear or branched $C_{1-20}$ alkyl radical. In ORMC2, the quinone or the linear or branched $C_{1-20}$ alkyl radical may be optionally substituted by a substituent selected from the group consisting of F, Cl, Br, I, OH, =O, COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, - (O=)CHNR, -HN(O=)CR, -(O=)COR, -HN(O=)CHNR, -HN(O=)COR, - (HN=)CHNR, -HN(NH=)CHNR, -(S=)CHNR, -HN(S=)CHNR, with R being H or a linear or branched $C_{1-20}$ alkyl radical. In a most preferred embodiment, ORMC2 is a quinone possibly substituted by one of the above substituents. In a particularly preferred embodiment, ORMC2 is a quinone selected from the group consisting of 1,2-benzoquinone, 1,4-benzoquinone, 1,2-naphtoquinone, 1,4-naphtoquinone, 1,2-anthraquinone, 1,4-anthraquinone, 9,10-anthraquinone, 5,7,12,14-pentacenetetrone, and more particularly 1,4-benzoquinone or 1,4-naphtoquinone.

In the OMRM compound of formula (1), the linkers L1 and L2 are advantageously exempt of redox active functional group.

In an embodiment, the linkers L1 and L2, identical or different, are linear or branched $C_{1-6}$ alkyl chains or wherein one (and only one) of the linkers L1 or L2 is a single bond, the linear or branched $C_{1-6}$ alkyl chain being optionally substituted by a substituent selected from the group consisting of F, Cl, Br, I, OH, =O (a ketone function), COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, -(O=)CHNR,

-HN(O=)CR, -(O=)COR, -HN(O=)CHNR, - HN(O=)COR, -(HN=)CHNR, -HN(NH=)CHNR, -(S=)CHNR, -HN(S=)CHNR, with R being H or a linear or branched $C_{1-20}$ alkyl radical.

In a preferred embodiment, the linkers L1 and L2 formed together an alicyclic or aromatic $C_{3-10}$ ring-closed cycle, and preferably an alicyclic $C_{3-10}$ ring-closed cycle, with only one point of attachment with ORMC2, said point of attachment being a linear or branched $C_{1-12}$ alkyl chain, the $C_{3-10}$ ring-closed cycle and/or the linear or branched $C_{1-12}$ alkyl chain between the $C_{3-10}$ ring-closed cycle and ORMC2 being optionally substituted by a substituent selected from the group consisting of F, Cl, Br, I, OH, =O (a ketone function), COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, - (O=)CHNR, -HN(O=)CR, -(O=)COR, -HN(O=)CHNR, -HN(O=)COR, - (HN=)CHNR, -HN(NH=)CHNR, -(S=)CHNR, -HN(S=)CHNR, with R being H or a linear or branched $C_{1-20}$ alkyl radical.

When the linkers L1 and L2 formed together an aromatic $C_{3-10}$ ring-closed cycle, the latter is advantageously an aromatic $C_{4-5}$ ring-closed cycle.

When the linkers L1 and L2 formed together an alicyclic $C_{3-10}$ ring-closed cycle, the latter is advantageously an alicyclic $C_{4-5}$ ring-closed cycle.

In a preferred embodiment, when the linkers L1 and L2 formed together an alicyclic $C_{3-10}$ ring-closed cycle, the latter is advantageously an alicyclic $C_5$ ring-closed cycle.

When the OMRM compound of formula (1) comprises one of the above substituents selected from the group consisting of F, Cl, Br, I, OH, =O, COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, - (O=)CHNR, -HN(O=)CR, -(O=)COR, -HN(O=)CHNR, -HN(O=)COR, - (HN=)CHNR, -HN(NH=)CHNR, -(S=)CHNR, -HN(S=)CHNR, with R being H or a linear or branched $C_{1-20}$ alkyl radical, said substituent is advantageously present on the ORMC2 group.

In a particularly preferred embodiment, the OMRM compound of formula (1) of the metal M-air battery cell of the invention is one of the following compounds:

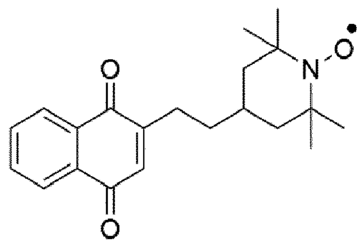

(1a)

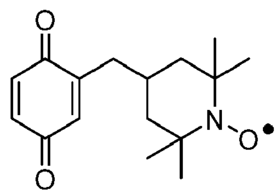

(1b)

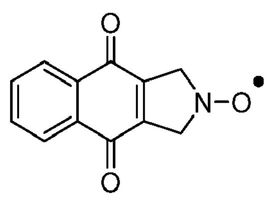

(1c)

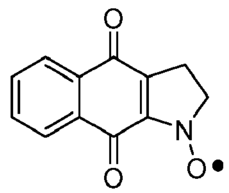

(1d)

In the metal M-air battery cell of the invention, the metal M is preferably selected from the group of metals consisting of lithium (Li), sodium (Na), potassium (K), magnesium (Mg), calcium (Ca), aluminium (Al), zinc (Zn), hydrogen (H), or from the group of alloys combining one of said metal with indium (In), silicon (Si), carbon (C), tin (Sn), or bismuth (Bi).

In a preferred embodiment, the metal M is selected from the group consisting of lithium (Li), sodium (Na), potassium (K), magnesium (Mg), calcium (Ca), aluminium (Al), zinc (Zn), hydrogen (H).

In a particularly preferred embodiment, the metal M of the metal M-air battery cell of the invention is lithium (Li). The present description concerning metal M-air battery cells therefore applies more specifically to lithium-air battery cells.

Hereinafter is a description of the different elements which constitute the metal M-air battery cell of the invention.

<Anode>

In the metal M-air battery cell of the invention, the negative electrode (which may also be referred to as "anode" hereinafter) comprises at least an anode active material (which may also be referred to as "negative electrode active material" hereinafter). As the anode active material, general anode active materials for metal M-air battery cells can be used and the anode active material is not particularly limited.

In a preferred embodiment, the negative electrode comprises a metal M, advantageously selected from the group of metals consisting of lithium (Li), sodium (Na), potassium (K), magnesium (Mg), calcium (Ca), aluminium (Al), zinc (Zn), hydrogen (H), or from the group of alloys combining one of said metal with indium (In), silicon (Si), carbon (C), tin (Sn), or bismuth (Bi). More advantageously, the negative electrode comprises lithium metal (Li).

By "lithium-protected anode", reference is made here for example (but is not limited to) to a "Lithium Protected Electrode" (LPE) as described in US 8,652,692. Usually the Li metal is covered by a solid electrolyte (for example LiSiCON (lithium superionic conductor) with formulae $LiM_2(PO_4)_3$). Between the LiSiCON and the Li metal, there is usually an interlayer (for example consisting of $Cu_3N/Li_3N$). In LPE systems, Li metal can be attached directly to one side of LiSiCON material, or alternatively a small amount of solvent containing a Li salt electrolyte may be added between the LiSiCON material and the Li metal to ensure Li ionic conductivity. Such materials have been described in, for example, US 7,282,295 and US 7,491,458. LiSiCON materials have also been described in Nature Materials, 10, 682-686 (2011).

When a metal, alloy or the like in the form of foil or metal is used as the anode active material, it can be used as the anode itself.

The anode is required to contain at least an anode active material; however, as needed, it can contain a binder for fixing the anode active material. The type and usage of the binder are the same as those of the air cathode described hereinafter.

An anode collector may be connected to the anode, which collects current from the anode. The material for the anode collector and the shape of the same are not particularly limited. Examples of the material for the anode collector include stainless steel, copper and nickel. Examples of the form of the anode collector include a foil form, a plate form and a mesh (grid) form.

<Cathode>

In the metal M-air battery cell of the invention, the positive electrode (which may also be referred to as "cathode" hereinafter) comprises at least a cathode active material (which may also be referred to as "positive electrode active material" hereinafter).

In the metal M-air battery cell of the invention, the positive electrode uses oxygen as a positive-electrode active material. Oxygen serving as the positive-electrode active material may be contained in air or oxygen gas.

In the metal M-air battery cell of the invention, the positive electrode may be supported on a carrier. An example of the carrier is carbon. Therefore, in a preferred embodiment, the positive electrode comprises carbon. Examples of carbon include carbon blacks, such as Ketjen Black, acetylene black, channel black, furnace black, lamp black, and thermal black; graphite, such as natural graphite, e.g., scaly graphite, artificial graphite, and expanded graphite; activated carbon from charcoal and coal; carbon foam; carbon fibers obtained by carbonizing synthetic fibers and petroleum pitch-based materials; carbon nanofibers; molecular carbon such as fullerenes; and tubular carbon, such as carbon nanotubes.

Modified carbons such as N-doped carbon may also be used.

Positive electrode materials can also be used in a metal M-air battery cell of the invention based on materials other than carbon. For example, positive electrode materials based on metal foam, stable and conductive metal oxides, or steel, can be used.

In the present invention, where carbon is used, it is preferably a porous material in the form of a powder and advantageously having a high specific surface area of 20 to 2000 $m^2/g$, preferably 60 to 2000 $m^2/g$, and most preferably 60 to 1500 $m^2/g$. For example, carbon may be used upon which a treatment is performed by a general method to increase porosity or surface area, followed by another treatment to increase the wettability. Examples of the commercial carbon products which can be used in the present invention include the KS series, SFG series, Super P series, and Super S series available from TIMCAL Ltd., activated carbon products available from Norit, Black Pearl and AB-Vulcan 72 available from Cabot, and KB-ECP and KB-ECP600JD available from Nouryon. Other examples of commercially available carbon include the WAC powder series available from Xiamen All Carbon Corporation, PW15-type, J-type and S-type Activated Carbons available from Kureha, and Maxsorb MSP-15 available from Kansai Netsu Kagaku.

Examples of the method for increasing the porosity, surface area and wettability of the carbon include physical activation or chemical activation. The chemical activation method includes, for example, immersing the carbon material in a strong alkaline aqueous solution (potassium hydroxide solution for example), in an acid solution (nitric acid or phosphoric acid for example) or in a salt (zinc chloride for example). This treatment can be followed (but not necessarily) by a calcination step at relatively low temperature (450 to 900°C for example).

In addition, the carbon preferably has pores having a pore diameter of 5 nm or more, preferably 20 nm or more. The specific surface area of the carbon and the pores size can be measured by the BET method or the BJH method, for example. Furthermore, in general, the carbon preferably has an average particle diameter (primary particle diameter) of 8 to 350 nm, more preferably 30 to 50 nm. The average primary particle diameter of the carbon can be measured by TEM.

The carbon used in the present invention may show any of the above-mentioned preferred ranges for specific surface area, pore diameter or particle diameter. Preferred carbon in the framework of the invention includes carbon showing a preferred range for just one of these types of physical feature, or carbon showing preferred ranges for two of the features, or carbon showing preferred ranges for each of the three features of specific surface area, pore diameter or particle diameter.

Among forms of carbon that can be used in the present invention are: Super P® Li (Timcal) showing a particle size of 40 nm and a specific surface area (determined by the Brunauer Emmet & Teller method) of 62 $m^2/g$; Black Pearl® 2000 (from Cabot Corporation) showing a particle size of 12 nm and a Specific Surface Area (determined by the Brunauer Emmet & Teller method) of 1487 $m^2/g$; Ketjen Black® EC-600JD (from AzkoNobel) showing a specific surface area (determined by the Brunauer Emmet & Teller method) of 1400 $m^2/g$.

In the metal M-air battery cell of the present invention, the positive electrode may contain a conductive material, in addition to the carbon and non-carbon materials discussed above. Examples of such further conductive materials include conductive fibers such as metal fibers; metal powders, such as silver, nickel, aluminum powders; and organic conductive materials such as polyphenylene derivatives. These may be used separately or in combination as a mixture.

In the metal M-air battery cell of the invention, the positive electrode may contain a binder. The binder is not particularly limited. The binder may be composed of a thermoplastic resin or a thermosetting resin. Examples thereof include polyethylene, polypropylene, polytetrafluoroethylene (PTFE), styrenebutadiene rubber, tetrafluoroethylene-hexafluoropropylene copolymers, tetrafluoroethylene-hexafluoropropylene copolymers (FEP), tetrafluoroethylene-perfluoroalkyl vinyl ether copolymers (PFA), vinylidene fluoride-hexafluoropropylene copolymers, vinylidene fluoride-chlorotrifluoroethylene copolymers, ethylene-tetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, and ethylene-acrylic acid copolymers. Copolymers having sulfonate group-terminated perfluorovinyl ether groups attached to a poly(tetrafluoroethylene) backbone, such as those commonly referred to as Nafion™, may also be envisaged as polymer binder materials in the present invention. These materials may be used separately or in combination as a mixture.

In general, in advantageous embodiments of the invention, an air cathode collector is connected to the air cathode, which collects current from the air cathode. The material for the air cathode collector and the shape of the same are not particularly limited. Examples of the material for the air cathode collector include stainless steel, aluminium, iron, nickel, titanium and carbon. Examples of the form of the air cathode collector include a foil form, a plate form, a mesh (grid) form and a fibrous form. Preferably, the air cathode collector has a porous structure such as a mesh form since the collector having a porous structure has excellent efficiency of oxygen supply to the air cathode.

In some embodiments, the air electrode (air cathode) further comprises hydrophobic hollow fibers. A hydrophobic fiber tends to generate a space between itself and the electrolyte. These spaces facilitate $O_2$ diffusion in the air electrode, enabling a thicker electrode to be used. Typically carbon-based air electrodes are 0.5 to 0.7 mm thick. Addition of hydrophobic fibers allows use of electrodes that are at least 1 mm thick. Suitable fibers include DuPont HOLLOFIL®

(100% polyester fiber with one more holes in the core), goose down (very small, extremely light down found next to the skin of geese), PTFE fiber, and woven hollow fiber cloth, among others. KETJENBLACK® carbon can also be coated on these fibers.

In the present invention, particularly preferred cathode materials are one or more of the following: carbon (e.g. Super C65, Ketjen black, Vulcan XC-72 CNT), $MnO_2$, $RuO_2$, $LaFeO_3$, $NiCo_2O_4$, Au, Ir, graphene, reduced graphene oxide (rGO). Combinations of these materials can be used.

<Electrolyte>

In the electrolyte composition of the present invention, the non-aqueous electrolyte medium arranged between the negative electrode and the positive electrode comprises an OMRM compound of formula (1) as defined in the present invention, as a soluble organic catalyst, and a metal M salt.

The concentration of the OMRM compound of formula (1) within the electrolyte medium ranges preferably from 1 to 100 mM, more preferably from 1 to 50 mM, and even more preferably from 5 to 15 mM. In a particularly preferred embodiment, the concentration of the OMRM compound of formula (1) within the electrolyte medium is of 10 mM.

The metal M salt is advantageously selected from the group of salts consisting of lithium (Li), sodium (Na), potassium (K), magnesium (Mg), calcium (Ca), aluminium (Al), zinc (Zn), hydrogen (H), and more advantageously lithium (Li).

Non-limiting examples of lithium salts that can be used include known supporting electrolytes, such as $LiPF_6$, $LiClO_4$, $LiAsF_6$, $LiBF_4$, $Li(CF_3SO_2)_2N$ (LiTFSI), LiFSI, $Li(CF_3SO_3)$ (LiTriflate), $LiN(C_2F_5SO_2)_2$, LiBOB, LiFAP, LiDMSI, LiHPSI, LiBETI, LiDFOB, LiBFMB, LiBison, LiDCTA, LiTDI, LiPDI. These salts may be used separately or in combination. In a particularly preferred embodiment, the salt is LiTFSI.

The concentration of the salt within the electrolyte medium is preferably in the range of 0.1 to 2.0 M, and more preferably of 0.8 to 1.2 M.

The metal salts are appropriately used in the electrolyte medium in combination with aprotic organic solvents known for use in metal M-air battery cells, and particularly in lithium-air battery cells. Examples of such aprotic organic solvents include chain carbonates, cyclic ester carbonates, chain ethers, cyclic ethers, glycol ethers, nitrile solvents, or mixtures thereof. Examples of chain carbonates include dimethyl carbonate, diethyl carbonate, and methyl ethyl carbonate. Examples of cyclic ester carbonates include γ-butyrolactone and γ-valerolactone. Examples of chain ethers include dimethoxyethane and ethylene glycol dimethyl ether. Examples of cyclic ethers include tetrahydrofuran and 2-methyltetrahydrofuran. Examples of glycol ethers include tetraethylene glycol dimethyl ether (TEGDME), diethylene glycol dimethyl ether (diglyme), triethylene glycol dimethyl ether (triglyme), poly(ethylene glycol) dimethyl ether with a weight average molecular weight Mw from 90 to 225 $g.mol^{-1}$. Nitrile solvents can also be used, such as acetonitrile, propionitrile, and 3-methoxypropionitrile. These aprotic organic solvents may be used separately or in combination as a mixture. Glycol ethers are the preferred aprotic organic solvents, and in particular tetraethylene glycol dimethyl ether (TEGDME).

In the framework of the present invention, gel polymer electrolytes can also be used. The gelled electrolyte having metal M ion conductivity can be obtained by, for example, adding a polymer to the non-aqueous electrolytic solution for gelation. In particular, in electrolyte for lithium-air battery cells, gelation can be caused by adding a polymer such as polyethylene oxide (PEO), polyvinylidene fluoride (PVDF, commercially available as Kynar, etc.), polyacrylonitrile (PAN), polymethyl methacrylate (PMMA), and poly(vinyl) chloride (PVC). A review of the use of gel-type polymer electrolytes for lithium-ion batteries is provided by Song et al., Journal of Power Sources, 77(1999), 183-197.

Components which can be cross-linked and/or thermoset may also be added to the gel electrolyte formulation to improve its mechanical properties.

Also, incorporation of substantial amount of plasticizers (PEG, crown ethers, etc.) may be carried out to improve the ionic conductivity of the polymer electrolytes.

In addition, nanoparticles/ceramics ($Al_2O_3$, $SiO_2$, $ZrO_2$, MgO, $CeO_2$, etc.) may be added to such gel polymer electrolytes to increase their conductivities. Reference in this regard may be made to EP 1 096 591 A1 or Croce et al., Electrochimica Acta 46 (2001), 2457-2461.

The nanoparticle/ceramic filler content is usually less than 10 wt% of the membrane. For example $Al_2O_3$ nanoparticles may be obtained from Aldrich Research Grade and have 5.8 nm particle size (Swierczynski et al., Chem. Mater., 2001, 13, 1560-1564). $SiO_2$ fumed silica may be obtained from Aldrich Reagents Grade, with a 7 nm particle size. In general, the nanoparticle size is preferentially around 15 nm or below.

It may further be contemplated in the framework of the present invention to add an oxygen dissolution enhancer to the electrolyte medium. This oxygen dissolution enhancer may be a fluorinated polymer, a fluorinated ether, a fluorinated ester, a fluorinated carbonate, a fluorinated carbon material, a fluorinated blood substitute, or indeed a metalloprotein. Such oxygen dissolution enhancers are described in US 2010/0266907.

<Separator>

In the rechargeable metal M-air battery cell of the present invention, a separator may advantageously be provided between the air cathode and the anode for complete electrical insulation between these electrodes. The separator is not particularly limited as long as it is able to electrically insulate the air cathode and the anode from each other and has a structure that allows the electrolyte to be present between the air cathode and the anode.
Examples of the separator include porous films and nonwoven fabrics comprising polyethylene, polypropylene, cellulose, polyvinylidene fluoride, glass ceramics, etc. Of these, a separator of glass ceramics is preferred.

<Battery cell case>

As the battery cell case for housing the rechargeable metal M-air battery cell, general battery cases for rechargeable metal M battery cell can be used. The shape of the battery cell case is not particularly limited as long as it can hold the above-mentioned air cathode, anode and electrolyte. Specific examples of the shape of the battery cell case include a coin shape, a flat plate shape, a cylindrical shape and a laminate shape. It is possible for the battery cell of the present invention to be completely encased in an oxygen-permeable membrane, advantageously one which shows selectivity for oxygen diffusion over that of water.

<Use of the battery cell of the invention>

The rechargeable metal M-air battery cell of the invention can discharge when an active material, which is oxygen, is supplied to the air cathode. Examples of oxygen supply source include the air and oxygen gas, and preferably oxygen gas. The pressure of the supplied air or oxygen gas is not particularly limited and can be appropriately determined.
The metal M-air battery cell of the present invention may be used as a primary battery cell or a rechargeable secondary battery cell.
The metal M-air battery cell of the present invention may, for example, be put to practical use in a process wherein the battery is cycled between certain limits defined by initial and final voltage, or initial and final capacity or specific capacity. For example, one process for using the metal M-air battery cell of the present invention may consist of a process wherein:

(a) the metal M-air battery cell is provided in a fully charged state;
(b) the metal M-air battery cell is subjected to discharge until the specific capacity reaches a value X;
(c) the metal M-air battery cell is recharged;
(d) steps (b) and (c) are repeated.

The specific capacity value X selected may vary widely and, for example, be situated in the range of 200 to 10000 $mAh.g^{-1}$. The specific capacity of a metal M-air battery cell may be determined by discharging up until 2 V. It may be appropriate during operation of the battery cell to cycle the battery cell within limits that do not go to full discharge or charge. It may be advantageous to cycle the battery cell from 10 to 90% of its specific capacity (determined in step (b)), preferably from 20 to 80%, and more preferably from 20 to 70%. Cycling may also be carried out between certain limits of initial or maximum theoretical discharge capacity. Capacity-limited cycling may enable the cell to survive longer, and it may thus be appropriate to limit the cycling capacity to around 30% of the full discharge capacity.
It is possible to provide as a product a lithium-air battery cell whose air cathode contains added $Li_2O_2$. Such a battery cell would typically be charged before use.
The metal M-air battery cell of the present invention can be assembled in battery packs. The number of battery cells may vary depending on the final use of the metal M-air battery, preferably is of at least two, and more preferably may vary from 2 to 250 battery cells. There are two possible ways to assemble battery cells depending on the final target: in parallel or in series. In parallel, the capacity of each cell is added while keeping the same voltage. In series, the voltage of each cell is added while the capacity is the one of the limited cell.
The metal M-air battery cell of the present invention can be used as a rechargeable battery for electric vehicles and hybrid vehicles, electronic devices (such as computers and telephones), and stationary power generating devices. The metal M-air battery cell of the present invention is advantageously used in devices related to mobility, and preferably cars, bikes, scooters and drones.
The invention also aims at a vehicle, an electronic device, and a stationary power generating device, comprising a battery pack according to the invention. The invention aims in particular at devices related to mobility, and preferably cars, bikes, scooters and drones, comprising a battery pack according to the invention.
In another aspect, the invention concerns a method for preparing an OMRM compound of formula (1) as defined in the present invention, said method comprising the steps of:

(i) forming an ethylenic bond by Wittig reaction between a compound bearing an ORMC2 derivative termination with at least one, and preferably at least two, $C_{1-20}$ alkoxy groups, and a compound bearing an ORMC1• derivative termination with a free radical precursor protected by a protecting group, the compound bearing the ORMC2 derivative termination also bearing a phosphonium substituent and the compound bearing the ORMC1• derivative termination also bearing an aldehyde or ketone substituent or conversely the compound bearing the ORMC2 derivative termination also bearing an aldehyde or ketone substituent and the compound bearing the ORMC1• derivative termination also bearing a phosphonium substituent,
(ii) hydrogenating the compound obtained at the end of step (i) with $H_2$, in presence of a catalyst, preferably palladium on carbon (Pd/C), to convert the ethylenic bond into a carbon-carbon single bond and remove the protecting group of the free radical precursor, and
(iii) oxidizing the compound obtained at the end of step (ii) to convert the $C_{1-20}$ alkoxy groups into ketone functions and the free radical precursor into a free radical.

Step (i) is advantageously carried out in presence of a strong base, preferably an organolithium reagent such as n-butyllithium, or an alcoholate in $C_{1-6}$.
The phosphonium substituent present on the ORMC2 derivative termination or on the ORMC1• derivative termination is preferably a methylenetriphenylphosphonium substituent.
The aldehyde or ketone substituent present on the ORMC2 derivative termination or on the ORMC1• derivative termination is preferably a $C_{1-6}$ aldehyde or ketone substituent.
In a preferred embodiment, the oxidizing step (iii) is carried out in two sub-steps:

(iii-a) oxidizing the compound obtained at the end of step (ii) to convert the $C_{1-20}$ alkoxy groups into ketone functions, and
(iii-b) oxidizing the compound obtained at the end of step (iii-a) to convert the free radical precursor protected by a protecting group into a free radical.

According to a first embodiment, the compound bearing an ORMC2 derivative termination with at least one $C_{1-20}$ alkoxy groups, implemented during the Wittig reaction of step (i), is a compound of one of the following formulas:

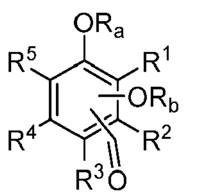

or

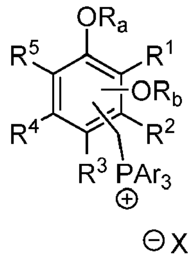

wherein:

- $R_a$ and $R_b$, identical or different, are $C_{1-20}$ alkoxy groups, preferably $C_{1-6}$ alkoxy groups, and more preferably $CH_3$,
- $R_1$, $R_2$, $R_3$, $R_4$ and $R_5$, independently of each other, are H or two of the adjacent radicals $R_1$, $R_2$, $R_3$, $R_4$ and $R_5$ form a $C_{4-8}$ aromatic ring, and preferably a $C_6$ aromatic ring,
- Ar is a $C_{4-8}$ aromatic ring, and preferably a $C_6$ aromatic ring, and
- $X^-$ is $F^-$, $Cl^-$, $Br^-$ or $I^-$.

According to a second embodiment, the compound bearing an ORMC1• derivative termination with a free radical precursor protected by a protecting group, implemented during the Wittig reaction of step (i), is a compound of one of the following formulas:

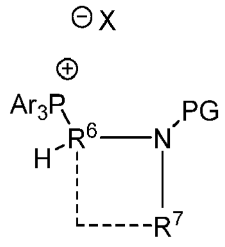

or

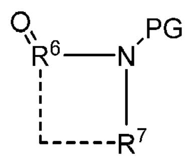

wherein:

- PG is a protecting group, preferably selected from benzyl (Bn), benzoyl (Bz), acetyl (Ac), *tert*-butyloxycarbonyl (BOC), 9-fluorenylmethyloxycarbonyl (FMOC), tosyl (Ts), carbobenzyloxy (Cbz), *p*-methoxybenzyl carbonyl (Moz), p-methoxybenzyl (PMB), 3,4-dimethoxybenzyl (DMPM), more preferably benzyl (Bn), carbobenzyloxy (Cbz), p-methoxybenzyl carbonyl (Moz), *p*-methoxybenzyl (PMB), 3,4-dimethoxybenzyl (DMPM), and even more preferably benzyl (Bn),
- $R_6$ and $R_7$, identical or different, precursors for linkers L1 and L2 precursors, are linear or branched $C_{1-12}$ alkyl chains optionally substituted by a substituent selected from the group consisting of F, Cl, Br, I, OH, =O (a ketone function), COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, - (O=)CHNR, -HN(O=)CR, -(O=)COR, -HN(O=)CHNR, -HN(O=)COR, - (HN=)CHNR, -HN(NH=)CHNR, -(S=)CHNR, -HN(S=)CHNR, with R being H or a linear or branched $C_{1-20}$ alkyl radical, or

  $R_6$ and $R_7$ form together an alicyclic or aromatic $C_{3-10}$ ring-closed cycle, optionally substituted by a linear or branched $C_{1-20}$ alkyl chain, the $C_{3-10}$ ring-closed cycle and/or the optional linear or branched $C_{1-20}$ alkyl chain present on the $C_{3-10}$ ring-closed cycle being optionally substituted by a substituent selected from the group consisting of F, Cl, Br, I, OH, =O (a ketone function), COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, - (O=)CHNR, -HN(O=)CR, -(O=)COR, -HN(O=)CHNR, -HN(O=)COR, - (HN=)CHNR, -HN(HN=)CHNR, -(S=)CHNR, -HN(S=)CHNR, with R being H or a linear or branched $C_{1-20}$ alkyl radical, and
  $R_6$ and $R_7$ optionally containing heteroatoms within their chains, and

- $X^-$ is $F^-$, $Cl^-$, $Br^-$ or $I^-$.

According to a preferred embodiment, the method of the invention for preparing a compound of formula (1) according to the invention comprises the following steps:

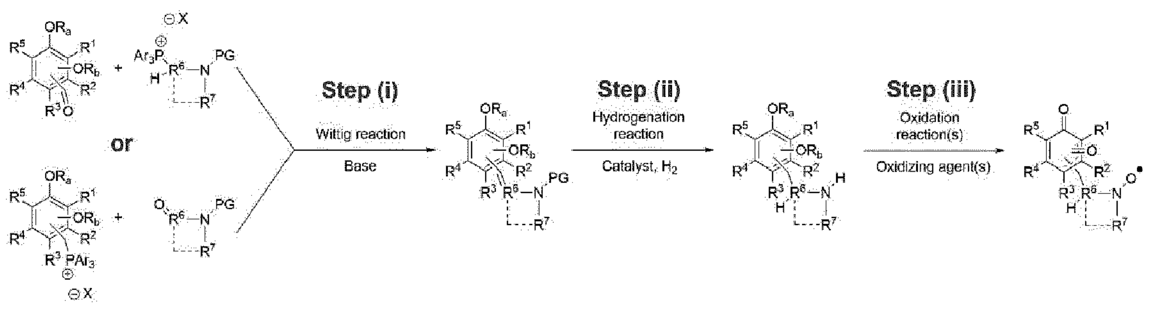


wherein $R_a$, $R_b$, $R_1$, $R_2$, $R_3$, $R_4$, $R_5$, Ar, $X^-$, PG, $R_6$ and $R_7$ are as defined above.
The invention also aims at a specific method for preparing a compound of formula (1a) as defined above, comprising the steps of:

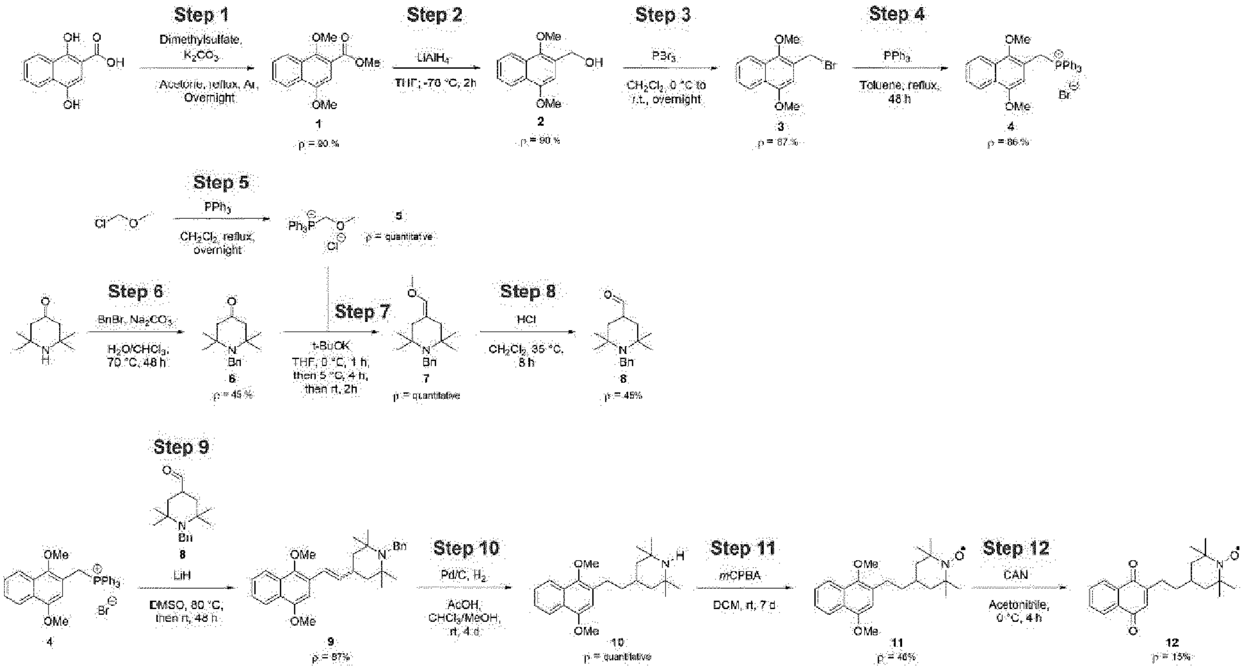


The invention also aims at a specific method for preparing a compound of formula (1b) as defined above, comprising the steps of:

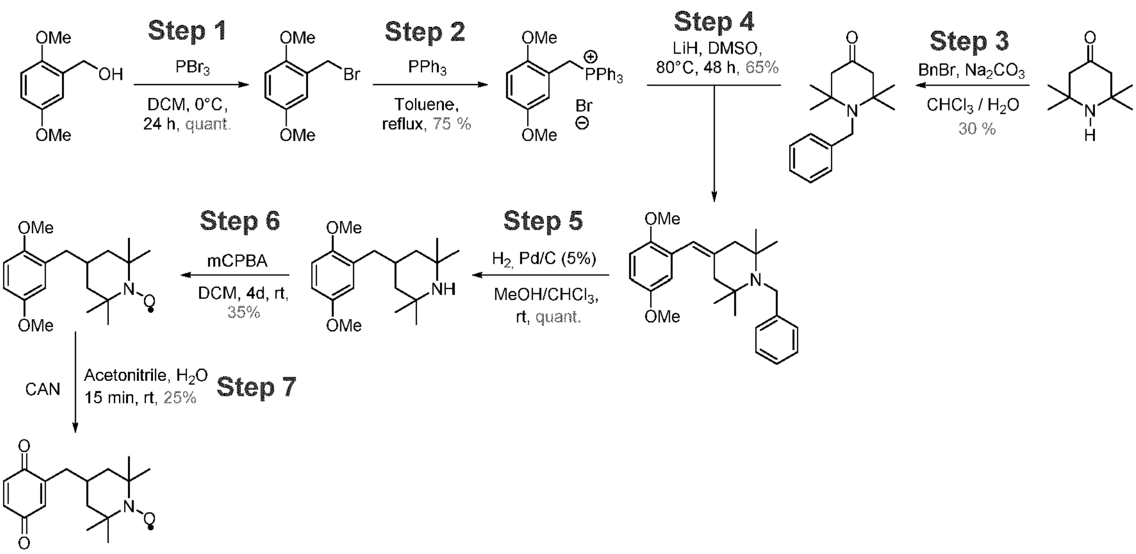


In another aspect, the invention concerns the use of an OMRM compound of formula (1) according to the invention as a soluble organic catalyst in a metal M-air battery cell, and in particular as part of a non-aqueous electrolyte medium of a metal M-air battery cell.

Any combination of the above described elements in all possible variations thereof is encompassed by the invention unless otherwise indicated herein or otherwise clearly contradicted by context. Thus, all features and embodiments described herein in particular as applicable, advantageous or preferred in the context of the invention are to be construed as being applicable in combination with one another, in preferred embodiments of the invention.

Examples

Preparation of an OMRM compound of formula (1a) according to the invention: 1,4-naphthoquinone-$(CH_2)_2$-TEMPO (OMRM1)

Step 1: Synthesis of methyl 1,4-dimethoxy-2-naphthoate **1**

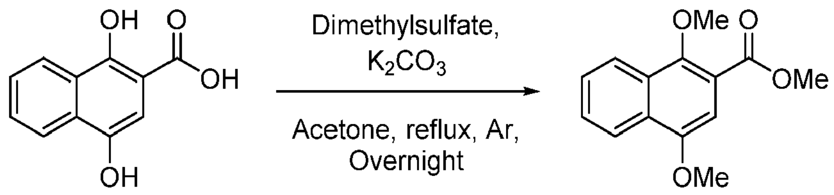


**1**

ρ = 90 %

6.1 g of 1,4-dihydroxy-2-naphtoic acid (29.9 mmol) were dissolved under argon in 60 mL of degassed acetone in a 250 mL flask. 14 mL of dimethylsulfate (5 eq., 149.5 mmol) and 37.2 g of potassium carbonate (9 eq., 268.8 mmol) were then added under vigorous stirring. The reaction mixture was stirred at reflux for 48 h. Progression of the reaction was monitored by TLC, using as eluant hexane:ethyl acetate= 4:1. After completion, the reaction mixture was filtered and concentrated under reduced pressure to obtain compound **1** as an orange-brown solid in a yield of 90% (6.63 g, 26.9 mmol). Mp = 68°C. $^1H$ NMR (400 MHz, $CDCl_3$) δ = 8.29 - 8.18 (m, 2H), 7.64 - 7.55 (m, 2H), 7.16 (s, 1H), 4.02 (s, 3H), 4.00 (s, 3H), 4.00 (s, 3H) ppm. $^{13}C$ NMR (100 MHz, $CDCl_3$): δ = 166.82, 152.05, 151.38, 129.21, 128.81, 127.74, 127.01, 123.47, 122.31, 118.39, 103.56, 63.52, 55.76, 52.29 ppm. HRMS ($ASAP^+$) for $C_{14}H_{15}O_4$ ($[M+H]^+$), calculated m/z = 247.0970; found 247.0973. IR (KBr pellet, $cm^{-1}$): 2939, 1732, 1594, 1460, 1370, 1227.

Step 2: Synthesis of 1,4-dimethoxy-2-hydroxymethylnaphthalene **2**

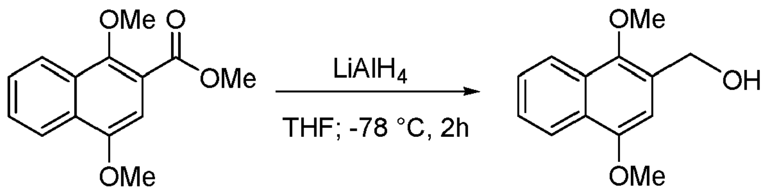


**1** **2**

ρ = 90 %

1.58 g of $LiAlH_4$ (3 eq., 41.4 mmol) was transferred to a 100 mL three-neck round bottom flask under argon and dissolved in 10 mL of dry THF. A solution of 3.4 g of methyl 1,4-dimethoxy-2-naphthoate **1** (13.8 mmol) in 20 mL of dry THF was then slowly added dropwise at -78°C under vigorous stirring. The reaction mixture was stirred at -78°C for 30 min, then was allowed to warm to room temperature and stirred for 2 h. The reaction was quenched with 10% aqueous HCl dropwise and was extracted thrice with ethyl acetate. The reunited organic phases were then backwashed with a saturated $NH_4Cl$ aqueous solution, then with brine, dried over anhydrous $MgSO_4$ and concentrated under reduced pressure to obtain compound **2** as a white greenish crystalline solid in a yield of 90% (2.71 g, 12.4 mmol). Mp = 68°C. $^1H$ NMR (400 MHz, $CDCl_3$) δ = 8.24 (ddd, J = 8.3, 1.4, 0.7 Hz, 1H), 8.04 (ddd, J = 8.3, 1.4, 0.7 Hz, 1H), 7.52 (dddd, J = 24.6, 8.2, 6.8, 1.4 Hz, 2H), 6.82 (s, 1H), 4.90 (s, 2H), 4.00 (s, 3H), 3.93 (s, 3H) ppm. $^{13}C$ NMR (100 MHz, $CDCl_3$) δ = 152.34, 147.14, 128.66, 128.61, 126.83, 126.45, 125.64, 122.57, 121.92, 103.96, 62.75, 61.14, 55.83 ppm. HRMS ($ASAP^+$) for $C_{13}H_{15}O_3$ ($[M+H]^+$), calculated m/z = 218.0947; found 218.0943. IR (KBr pellet, $cm^{-1}$): 3348, 2945, 1595, 1453, 1367, 1088.

Step 3: Synthesis of 2-(bromomethyl)-1,4-dimethoxynaphthalene **3**

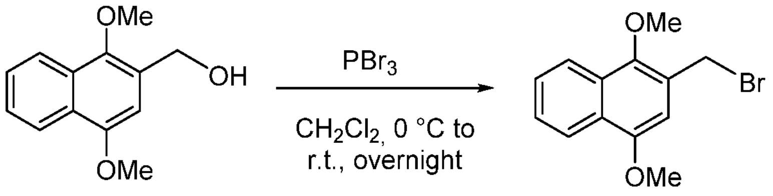


**2** **3**

ρ = 87 %

2.0 g (9.16 mmol) of (1,4-dimethoxynaphthalen-2-yl)methanol **2** were dissolved in 16 mL of $CH_2Cl_2$ and cooled to 0°C under argon. A solution of $PBr_3$ (1.72 mL, 2 eq., 18.3 mmol) in 5 mL of $CH_2Cl_2$ was then added dropwise under vigorous stirring. The reaction was stirred at 0°C for 2 h and then allowed to warm to room temperature overnight. The reaction was quenched by a dropwise addition of an aqueous saturated solution of sodium bicarbonate up to the end of gas evolution. The mixture was then extracted thrice with 30 mL $CH_2Cl_2$ and the reunited organic phases were backwashed with brine, and dried over anhydrous $MgSO_4$. The mixture was concentrated under reduced pressure and **3** was obtained as a purple solid without further purification with a yield of 87% (2.24 g, 7.97 mmol). Mp = 76°C. $^1H$ NMR (400 MHz, $CDCl_3$) δ = 8.23 (ddd, J = 8.1, 1.5, 0.7 Hz, 1H), 8.05 (ddd, J = 8.3, 1.5, 0.7 Hz, 1H), 7.53 (dddd, J = 20.3, 8.2, 6.8, 1.4 Hz, 2H), 6.73 (s, 1H), 4.77 (s, 2H), 4.01 (s, 3H), 4.01 (s, 3H) ppm. $^{13}C$ NMR (100 MHz, $CDCl_3$) δ = 152.38, 148.07, 128.61, 127.20, 127.12, 126.36, 125.87, 122.69, 122.43, 104.96, 62.54, 55.88, 29.17 ppm. HRMS ($ASAP^+$) for $C_{13}H_{14}{}^{79}BrO_2$ ($[M+H]^+$), calculated m/z = 281.0180; found 281.0177. IR (KBr pellet, $cm^{-1}$): 2943, 1594, 1451, 1365, 704.

Step 4: Synthesis of ((1,4-dimethoxynaphthalen-2-yl)methyl)triphenylphosphonium bromide **4**

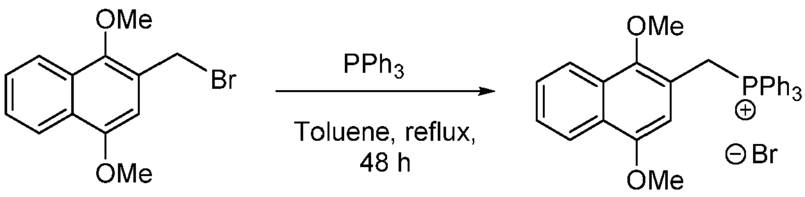


**3** **4**

ρ = 86 %

1.5 g (5.34 mmol) of 2-(bromomethyl)-1,4-dimethoxynaphthalene **3** was dissolved in 70 mL of toluene and 3.5 g (2,5 eq., 13.3 mmol) of triphenylphosphine were slowly added to the solution. The reaction mixture was stirred at reflux for 48 h. The precipitate was filtered and washed with hot toluene, and dried under vacuum at 120°C overnight to afford **4** as a white solid compound in a yield of 86% (2.5 g, 4.59 mmol). Mp = 266°C. $^1H$ NMR (400 MHz, $CDCl_3$) δ = 8.18 - 8.09 (m, 1H), 7.83 - 7.62 (m, 10H), 7.62 - 7.53 (m, 6H), 7.52 - 7.40 (m, 2H), 6.70 (d, J = 1.7 Hz, 1H), 5.44 (d, J = 14.6 Hz, 2H), 3.74 (s, 3H), 3.61 (s, 3H) ppm. $^{13}C$ NMR (100 MHz, $CDCl_3$) δ = 151.97 (d, J = 2.7 Hz), 149.00 (d, J = 8.6 Hz), 135.01 (d, J = 3.1 Hz), 134.74 (d, J = 9.8 Hz), 130.14 (d, J = 12.8 Hz), 128.09, 127.01, 126.85, 126.23, 122.90, 121.99, 118.47 (d, J = 85.9 Hz), 116.01 (d, J = 9.6 Hz), 107.03 (d, J = 3.6 Hz), 62.53, 56.19, 26.63 (d, J = 48.2 Hz) ppm. $^{31}P$ NMR (162 MHz, $CDCl_3$) δ = 22.83 ppm. HRMS ($ESI^+$) for $C_{31}H_{28}O_2P^+$ ($[M-Br^-]^+$), calculated m/z = 463.1827; found 463.1815. IR (KBr pellet, $cm^{-1}$): 3015, 2886, 1589, 1441 (C-H), 1375.

Step 5: Synthesis of (methoxymethyl)triphenylphosphonium chloride **5**

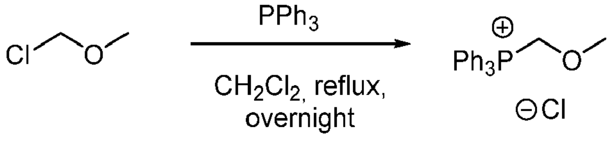


**5**

ρ = quantitative

To a 20 g (76 mmol) of triphenylphosphine solution in 40 mL $CH_2Cl_2$ were added 6.4 mL (1.1 eq, 84.2 mmol) of chloromethyl methyl ether chloride. The reaction mixture was stirred at 55°C overnight. After cooling back to room temperature, 30 mL of toluene were added on the resulting suspension. The solid was collected by filtration, washed with petroleum ether and dried under vacuum at 90°C overnight to afford **5** as a white solid in a quantitative yield (25.7 g, 75 mmol). Mp = 209 °C. $^1H$ NMR (400 MHz, $CDCl_3$) δ = 7.85 - 7.75 (m, 9H), 7.67 (td, J = 7.7, 3.5 Hz, 6H), 5.89 (d, J = 3.9 Hz, 2H), 3.70 (d, J = 0.8 Hz, 3H) ppm. $^{13}C$ NMR (100 MHz, $CDCl_3$) δ = 135.37, 134.20 (d, J = 8.8 Hz), 130.46 (d, J = 12.7 Hz), 116.70 (d, J = 82.9 Hz), 66.01 (d, J = 67.6 Hz), 62.81 (d, J = 12.4 Hz) ppm. $^{31}P$ NMR (162 MHz, $CDCl_3$) δ = 17.71 ppm. HRMS ($ESI^+$) for $C_{20}H_{20}OP^+$ ($[M-Cl^-]^+$), calculated m/z = 307.1252; found 307.1251. IR (KBr pellet, $cm^{-1}$): 2990, 2844, 1591, 1441, 1107, 760.

Step 6: Synthesis of 1-benzyl-2,2,6,6-tetramethylpiperidin-4-one

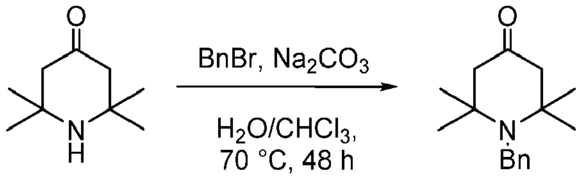


**6**

ρ = 45 %

To a 10.1 g (65 mmol) of 2,2,6,6-tetramethylpiperidinone solution in 80 mL of a biphasic $H_2O/CHCl_3$ solution (1/1, v/v) were added 20.7 g (3 eq., 195 mmol) of sodium carbonate and 7.7 mL (1 eq., 65 mmol) of benzylbromide. The reaction mixture was refluxed at 70 °C for 48 h and was then diluted with 100 mL of a biphasic $H_2O/CHCl_3$ solution (1/1, v/v). The phases were separated, then the aqueous phase was extracted twice with 50 mL of chloroform. The reunited organic phases were washed with, successively, 10 mL of 1M HCl, 50 mL of brine and twice with 50 mL of water, then dried over $MgSO_4$ and filtered. The solvent was removed under reduce pressure and the resulting product was purified by flash chromatography (silica gel, heptane-EtOAc, 9:1) to afford **6** as a crystalline white solid with a yield of 45% (7.18g, 29.3 mmol). **6** is thermosensitive and was kept at -15°C. Mp = 106°C. $^1H$ NMR (400 MHz, $CDCl_3$) δ = 7.52 - 7.44 (m, 2H), 7.35 - 7.27 (m, 2H), 7.23 - 7.14 (m, 1H), 3.92 (s, 2H), 2.47 (s, 4H), 1.13 (s, 12H) ppm. $^{13}C$ NMR (100 MHz, $CDCl_3$) δ = 209.95, 144.75, 128.15, 126.68, 126.04, 60.17, 56.02, 47.73 ppm. HRMS ($ASAP^+$) for $C_{16}H_{24}NO$ ($[M+H]^+$), calculated m/z = 246.1858; found 246.1862. IR (KBr pellet, $cm^{-1}$): 2983, 1712, 1490, 1314, 1252, 1044, 709.

Step 7: Synthesis of 1-benzyl-4-(methoxymethylene)-2,2,6,6-tetramethylpiperidine **7**

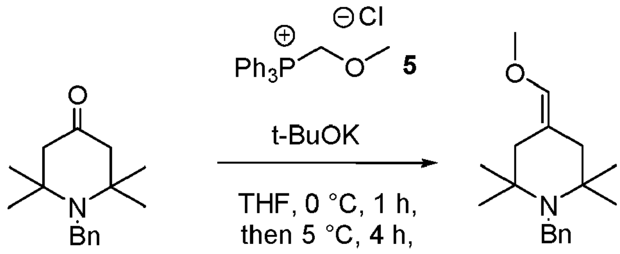


6

7

ρ = quantitative

Under inert atmosphere, a solution of 2.33 g (1.7 eq., 20.7 mmol) of potassium *tert*-butoxide in 10 mL of THF was slowly added to a suspension of 6.3 g (1.5 eq., 18.4 mmol) of (methoxymethyl)triphenylphosphonium chloride **5** in 20 mL of THF at 0°C. The reaction mixture was stirred for 2 h at 0°C, then a 3 g (12.2 mmol) solution of 1-benzyl-2,2,6,6-tetramethyl-4-piperidone **6** in 10 mL of THF was added dropwise. After stirring at 5°C for 4 h and at room temperature for 2 h, 50 mL of deionised water was added to the reaction mixture. The phases were separated, then the aqueous phase was extracted thrice with 50 mL of diethyl ether. The combined organic layers were concentrated under reduce pressure. 40 mL of hexane were then added on the residue, which was stirred and the hexane phase was then collected to extract the product. This operation was performed thrice overall, and the combined hexane phases were concentrated under reduced pressure to afford **7** as a yellow solid product in a quantitative yield (3.34 g, 12.2 mmol). Mp = 68 °C. $^1H$ NMR (400 MHz, $CDCl_3$) δ = 7.47 (dq, J = 7.2, 1.1 Hz, 2H), 7.37 - 7.23 (m, 2H), 7.15 (tdt, J = 6.8, 1.3, 0.6 Hz, 1H), 5.91 (p, J = 1.1 Hz, 1H), 3.78 (s, 2H), 3.58 (s, 3H), 2.22 (s, 2H), 1.97 (s, 2H), 1.00 (s, 6H), 0.99 (s, 6H) ppm. $^{13}C$ NMR (100 MHz, CDCl3) δ = 146.00, 141.20, 127.88, 126.82, 125.61, 113.03, 59.58, 56.69, 56.64, 48.27, 45.54, 41.08 ppm. HRMS ($ASAP^+$) for $C_{18}H_{27}NO$ ($[M+H]^+$), calculated m/z = 274.2171; found 274.2175. IR (KBr pellet, $cm^{-1}$): 2971, 1689, 1441, 1314, 1248, 1116, 723, 544.

Step 8: Synthesis of 1-benzyl-2,2,6,6-tetramethylpiperidine-4-carbaldehyde **8**

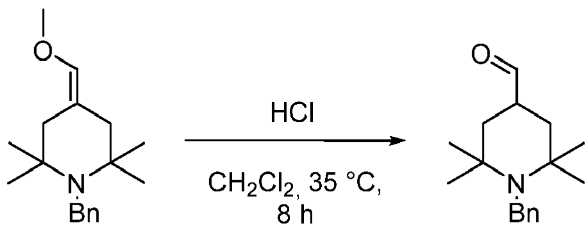


7

8

ρ = 45%

To a 2.7 g (9.88 mmol) solution of 7 in 15 mL of $CH_2Cl_2$ were added 1.65 mL of a 12 M aqueous HCl solution (37% w/w, 2 eq., 19.76 mmol). The mixture was stirred at 35°C for 8h. A 1 M NaOH aqueous solution was then slowly added up to pH = 9-10. The phases were separated, then the aqueous phase was extracted twice with 30 mL of $CH_2Cl_2$. The combined organic layers were backwashed with 50 mL of deionised water, dried over anhydrous $MgSO_4$ and filtered. The solvent was removed under reduced pressure and after a flash column chromatography purification (silica gel, heptane-EtOAc, 9:1), **8** was obtained as a pale yellow solid with a yield of 45% (1.15 g, 4.45 mmol). Mp = 78°C. $^1H$ NMR (400 MHz, $CDCl_3$) δ = 9.68 (d, J = 1.6 Hz, 1H), 7.42 (ddt, J = 7.3, 2.2, 1.1 Hz, 2H), 7.27 (dd, J = 8.4, 6.9 Hz, 2H), 7.19 - 7.10 (m, 1H), 3.84 (s, 2H), 2.70 (ttd, J = 12.9, 3.3, 1.6 Hz, 1H), 1.78 (ddt, J = 13.0, 2.9, 1.3 Hz, 2H), 1.62 - 1.49 (m, 2H), 1.14 (s, 6H), 1.01 (s, 6H) ppm. $^{13}C$ NMR (100 MHz, $CDCl_3$) δ = 204.68, 145.44, 127.97, 126.70, 125.80, 54.95, 47.87, 42.94, 40.54, 33.73, 21.92 ppm. HRMS ($ASAP^+$) for $C_{17}H_{26}NO$ ($[M+H]^+$), calculated m/z = 260.2014; found 260.2016. IR (KBr pellet, $cm^{-1}$): 2971, 1718, 1492, 1371, 1267, 1173, 723.

Step 9: Synthesis of 1-benzyl-(2-(1,4-dimethoxynaphthalen-2-yl)vinyl)-2,2,6,6-tetramethylpiperidine **9**

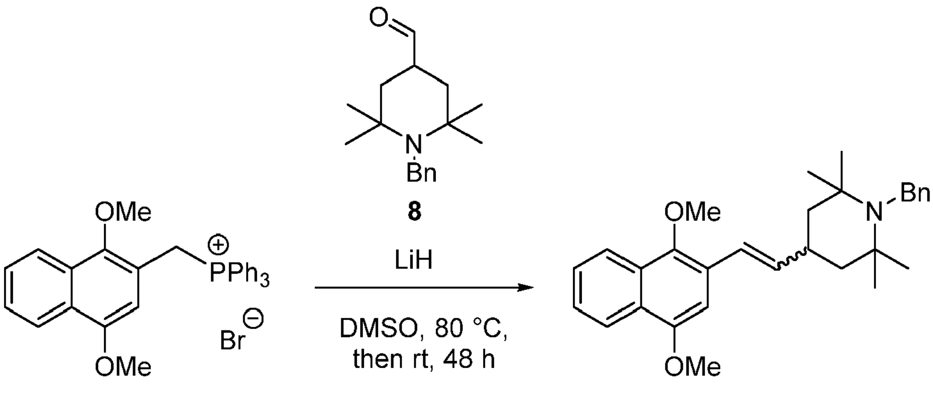


8

4

9

ρ = 87%

Under inert atmosphere, 24 mg of LiH (1 eq., 3 mmol) were suspended in 6 mL of dry DMSO. The suspension was stirred at 80°C for 1 h and then cooled to room temperature. 1.632 g (3 mmol) of the phosphonium salt **4** was then carefully added with the reaction medium turning quickly red, indicating the formation of the phosphorus ylide intermediate. After 20 min, 780 mg (1 eq., 3 mmol) of aldehyde **8** was added and the reaction mixture was stirred at 80°C for 48 h. The reaction mixture was then poured over ice, the aqueous phase was extracted thrice with 30 mL of diethyl ether, and the reunited organic phases were dried over anhydrous $MgSO_4$. The solvent was removed under reduced pressure and after a flash column chromatography purification (silica gel, heptane-EtOAc, 9:1), a E/Z mixture of **9** was obtained as a yellow solid with a yield of 87% (1.16 g, 2.61 mmol). Mp < 50°C. $^1H$ NMR (400 MHz, $CDCl_3$) δ = 8.22 (dddd, J = 11.6, 8.3, 1.4, 0.7 Hz, 1H), 8.09 (dddd, J = 13.3, 8.4, 1.4, 0.7 Hz, 1H), 7.58 - 7.39 (m, 4H), 7.29 (tq, J = 7.7, 1.6 Hz, 2H), 7.20 - 7.12 (m, 1H), 6.96 (dd, J = 16.1, 1.2 Hz, 1H), 6.91 (s, 1H), 6.28 (dd, J = 16.1, 6.9 Hz, 1H), 4.05 - 3.95 (m, 3H), 3.90 (d, J = 16.3 Hz, 4H), 3.88 (s, 1H), 3.82 (s, 1H), 1.75 (ddd, J = 11.7, 3.5, 1.5 Hz, 2H), 1.60 (s, 1H), 1.59 - 1.48 (m, 2H), 1.36 - 1.25 (m, 1H), 1.21 (s, 4H), 1.04 (d, J = 22.2 Hz, 6H), 0.97 (s, 2H) ppm. $^{13}C$ NMR (100 MHz, CDCl3) δ 152.09, 151.71, 151.40, 147.56, 146.79, 146.03, 145.91, 138.63, 137.03, 129.10, 128.89, 127.89, 126.84, 126.80, 126.72, 126.59, 126.36, 126.06, 125.69, 125.66, 125.46, 125.36, 124.70, 123.93, 122.58, 122.45, 122.36, 122.33, 122.18, 122.11, 121.63, 107.00, 105.50, 100.84, 62.38, 61.75, 55.83, 55.75, 55.33, 55.03, 47.93, 47.87, 47.79, 34.01, 33.90, 32.99, 22.33, 22.10 ppm. HRMS ($ASAP^+$) for $C_{30}H_{38}NO_2$ ($[M+H]^+$), calculated m/z = 444.2903; found 444,2906. IR (KBr pellet, $cm^{-1}$): 2965, 1590, 1458, 1377, 1216.

Step 10: Synthesis of 4-(2-(1,4-dimethoxynaphthalen-2-yl)ethyl)-2,2,6,6-tetramethylpiperidine **10**

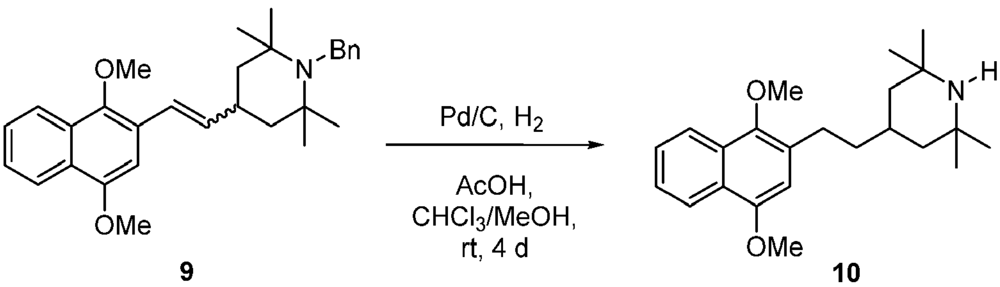


9

10

ρ = quantitative

Under inert atmosphere, 2.2 g of **9** (4.96 mmol) were dissolved in 30 mL of a $CHCl_3$/MeOH (1/2, v/v) solution. 500 μL of acetic acid and 4.4 g of Pd/C (5 wt %, ratio **9**/(Pd/C)**:** 1/2, w/w) were then added and the reaction vessel was purged with 0.5 bar of hydrogen for 30 min. The reaction mixture was stirred with a constant overall pressure of 1.5 bar for 4 days at room temperature, then filtered over celite and washed with chloroform. The solvent was concentrated under reduced pressure and the resulting product was dissolved again in chloroform, filtered over celite, washed with chloroform and concentrated under reduced pressure to afford **10** as a white solid product with a quantitative yield (1.76 g, 4.96 mmol). Mp = 96°C. $^1H$ NMR (400 MHz, MeOD) δ = 7.60 (d, J = 8.3 Hz, 1H), 7.42 (d, J = 8.3 Hz, 1H), 6.95 (t, J = 7.5 Hz, 1H), 6.85 (t, J = 7.5 Hz, 1H), 6.18 (s, 1H), 3.43 (s, 3H), 3.31 (s, 3H), 2.76 (s, 4H), 2.33 (d, J = 7.4 Hz, 2H), 1.40

(m, 3H), 1.16 (d, J = 7.6 Hz, 2H), 0.87 (s, 6H), 0.84 (s, 6H), 0.81 - 0.65 (m, 4H) ppm. $^{13}C$ NMR (100 MHz, MeOD) $\delta$ = 153.57, 148.28, 131.07, 130.07, 127.77, 127.06, 126.01, 123.46, 122.79, 106.87, 62.80, 58.46, 56.63, 43.15, 38.42, 31.11, 28.47, 28.18, 25.43 ppm. HRMS ($ASAP^+$) for $C_{23}H_{34}NO_2$ ($[M+H]^+$), calculated m/z = 356.2590; found 356.2587. IR (KBr pellet, $cm^{-1}$): 3412, 2937, 1596, 1460, 1371, 1230, 1089, 999, 769.

Step 11: Synthesis of 4-(2-(1,4-dimethoxynaphthalen-2-yl)ethyl)-2,2,6,6-tetramethylpiperidin-1-oxy **11**

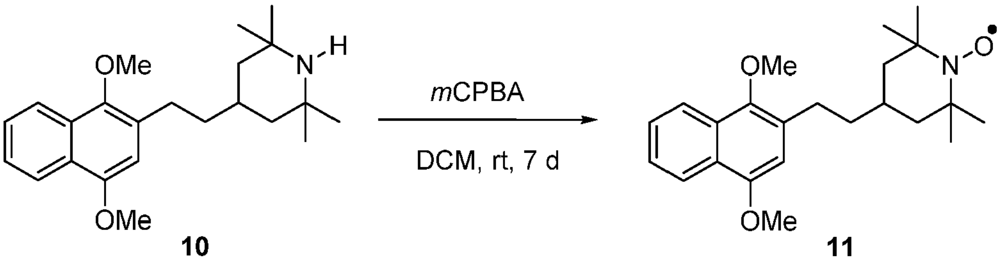


**10** **11**

ρ = 46%

Under inert atmosphere, to a 1.10 g solution of **10** (3.09 mmol) in 30 mL of $CH_2Cl_2$, were added dropwise a solution of 2.77 g of *m*CPBA (4 eq., 12.36 mmol) in 40 mL of $CH_2Cl_2$. The reaction was stirred at room temperature for 7 days. The mixture was then washed twice with 40 mL of a saturated $NaHCO_3$ solution, twice with deionised water, dried over anhydrous $MgSO_4$ and filtered. The solvent was removed under reduced pressure and after a flash column chromatography purification (silica gel, cyclohexane-EtOAc, 4:1), **11** was obtained as an orange oil with a yield of 46% (527 mg, 1.42 mmol). Mp < 50°C. HRMS ($ASAP^-$) for $C_{23}H_{32}NO_3$ ($[M]^-$), calculated m/z = 370.2409; found 370.2397. IR (KBr pellet, $cm^{-1}$): 2937, 1582, 1454, 1366, 1363, 1243, 1087, 1012, 770. EPR: singlet between 3300 and 3400 Gauss.

Step 12: Synthesis of 1,4-naphthoquinone-$(CH_2)_2$-TEMPO **12**

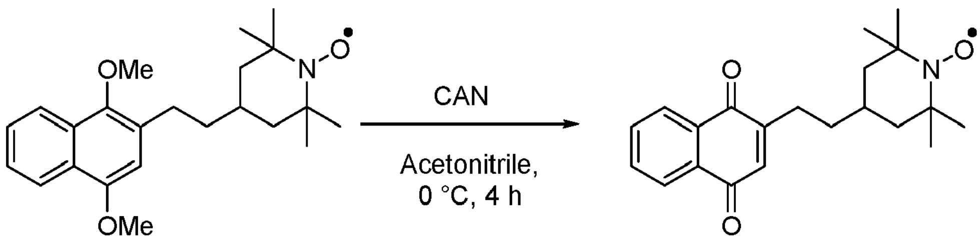


**11** **12**

ρ = 15%

To a 161 mg (0.435 mmol) solution of **11** in 20 mL of acetonitrile were added dropwise at 0 °C a 729.5 mg (3 eq., 1.303 mmol) solution of CAN in 20 mL of deionised water. The reaction was then warmed to room temperature and stirred for 4h. The phases were separated and the aqueous phase was extracted thrice with 30 mL of $CHCl_3$. The reunited organic phases were backwashed thrice with 40 mL of deionised water, dried over anhydrous $MgSO_4$ and filtered. The solvent was removed under reduced pressure and after a flash column chromatography purification (silica gel, cyclohexane-EtOAc, 4:1), **12** was obtained as a brown solid with a yield of 15% (22.2 mg, 65.3 μmol). Mp > 200°C (dec.). HRMS ($ASAP^-$) for $C_{23}H_{32}NO_3$ ($[M]^-$), calculated m/z = 340.1912; found 340.1913. IR (KBr pellet, $cm^{-1}$): 2937, 1668, 1594, 1459, 1363, 1268, 1104, 848, 713. EPR: singlet between 3300 and 3400 Gauss.

Characterisation of the 1,4-naphthoquinone-$(CH_2)_2$-TEMPO compound of formula (1a):

The equipment and techniques of characterization used are as follows:

High-Resolution Mass Spectrometry (HRMS): Xevo G2-XS QTOF spectrometer (Waters, USA) for ESI+, ESI- and

ASAP$^+$. This technique involves the conversion of sample into gaseous ions. Multiple ions from the sample under investigation can be generated, then these ions can be separated according to their mass to charge ratio (m/z) and to their relative abundance.

Nuclear Magnetic Resonance spectroscopy (NMR): 400 MHz $^1$H NMR, 100 MHz $^{13}$C NMR and 162 MHz $^{31}$P NMR: CRYOMAGNET spectrometer with an automatic sample holder and 400 MHz / 52 mm probe from Spectrospin & Bruker.

Melting point determination (Mp): Wagner & Munz Kofler heating bench.

Infrared spectroscopy (IR): Vertex 70 Spectrometer from Bruker.

Electron Paramagnetic Resonance (EPR): ELEXSYS from Bruker. This technique allows unpaired electron to absorb and emit the energy from electromagnetic radiation. It is based on the sample irradiation with a 10 GHz fixed frequency wave while scanning the magnetic field in order to satisfied the resonance conditions.

Table 1:

| | MS | $^{H}$ NMR | $^{C}$ NMR | $^{P}$ NMR | Mp (°C) | IR | RPE |
|---|---|---|---|---|---|---|---|
| Step 1 | $C_{14}H_{15}O_4$ ([M+H]$^+$) 247.0973 | 8.29 - 8.18 (m, 2H), 7.64 - 7.55 (m, 2H), 7.16 (s, 1H), 4.02 (s, 3H), 4.00 (s, 3H), 4.00 (s, 3H) | 166.82, 152.05, 151.38, 129.21, 128.81, 127.74, 127.01, 123.47, 122.31, 118.39, 103.56, 63.52, 55.76, 52.29 | N.A | 68°C | 2939, 1732, 1594,1460,1370, 1227 | N.A |
| Step 2 | $C_{13}H_{15}O_3$ ([M+H]$^+$) 218.0943 | 8.24 (ddd, J = 8.3, 1.4, 0.7 Hz, 1H), 8.04 (ddd, J = 8.3, 1.4, 0.7 Hz, 1H), 7.52 (dddd, J = 24.6, 8.2, 6.8, 1.4 Hz, 2H), 6.82 (s, 1H), 4.90 (s, 2H), 4.00 (s, 3H), 3.93 (s, 3H) | 152.34, 147.14, 128.66, 128.61, 126.83, 126.45, 125.64, 122.57, 121.92, 103.96, 62.75, 61.14, 55.83 | N.A. | 68°C | 3348, 2945, 1595,1453,1367, 1088 | N.A. |
| Step 3 | $C_{13}H_{14}{}^{79}Br\,O_2$ ([M+H]$^+$) 281.0177 | 8.23 (ddd, J = 8.1, 1.5, 0.7 Hz, 1H), 8.05 (ddd, J = 8.3, 1.5, 0.7 Hz, 1H), 7.53 (dddd, J = 20.3, 8.2, 6.8, 1.4 Hz, 2H), 6.73 (s, 1H), 4.77 (s, 2H), 4.01 (s, 3H), 4.01 (s, 3H) | 152.38, 148.07, 128.61, 127.20, 127.12, 126.36, 125.87, 122.69, 122.43, 104.96, 62.54, 55.88, 29.17 | N.A. | 76°C | 2943,1594, 1451,1365, 704 | N.A. |
| Step 4 | $C_{31}H_{28}O_2P^+$ ([M-Br$^-$]$^+$) | 8.18 - 8.09 (m, 1H), 7.83 - 7.62 (m, 10H), | 151.97 (d, J = 2.7 Hz), 149.00 | 22.83 | 266 °C | 3015,2886,1589, 1441, | N.A. |
| | 463.1815 | 7.62 - 7.53 (m, 6H), 7.52 - 7.40 (m, 2H), 6.70 (d, J = 1.7 Hz, 1H), 5.44 (d, J = 14.6 Hz, 2H), 3.74 (s, 3H), 3.61 (s, 3H) | (d, J = 8.6 Hz), 135.01 (d, J = 3.1 Hz), 134.74 (d, J = 9.8 Hz), 130.14 (d, J = 12.8 Hz), 128.09, 127.01, 126.85, 126.23, 122.90, 121.99, 118.47 (d, J = 85.9 Hz), 116.01 (d, J = 9.6 Hz), 107.03 (d, J = 3.6 Hz), 62.53, 56.19, 26.63 (d, J = 48.2 Hz) | | | 1375 | |

(continued)

| | MS | H NMR | C NMR | P NMR | Mp (°C) | IR | RPE |
|---|---|---|---|---|---|---|---|
| Step 5 | $C_{20}H_{20}OP^+$ ([M-Cl$^-$]$^+$) 307.1251 | 7.85 - 7.75 (m, 9H), 7.67 (td, J = 7.7, 3.5 Hz, 6H), 5.89 (d, J = 3.9 Hz, 2H), 3.70 (d, J = 0.8 Hz, 3H) | 135.37, 134.20 (d, J = 8.8 Hz), 130.46 (d, J = 12.7 Hz), 116.70 (d, J = 82.9 Hz), 66.01 (d, J = 67.6 Hz), 62.81 (d, J = 12.4 Hz) | 17.71 | 209 °C | 2990,2844, 1591, 1441, 1107,760 | N.A. |
| Step 6 | $C_{16}H_{24}NO$ ([M+H]$^+$) 246.1862 | 7.52 - 7.44 (m, 2H), 7.35 - 7.27 (m, 2H), 7.23 - 7.14 (m, 1H), 3.92 (s, 2H), 2.47 (s, 4H), 1.13 (s, 12H) | 209.95, 144.75, 128.15, 126.68, 126.04, 60.17, 56.02, 47.73 | N.A. | 106 °C | 2983, 1712, 1490,1314, 1252, 1044, 709 | N.A. |
| Step 7 | $C_{18}H_{27}NO$ ([M+H]$^+$) 274.2175 | 7.47 (dq, J = 7.2, 1.1 Hz, 2H), 7.37 - 7.23 (m, 2H), 7.15 (tdt, J = 6.8, 1.3, 0.6 Hz, 1H), 5.91 (p, J = 1.1 Hz, 1H), 3.78 (s, 2H), 3.58 (s, 3H), 2.22 (s, 2H), 1.97 (s, 2H), 1.00 (s, 6H), 0.99 (s, 6H) | 146.00, 141.20, 127.88, 126.82, 125.61, 113.03, 59.58, 56.69, 56.64, 48.27, 45.54, 41.08 | N.A. | 68° C | 2971, 1689, 1441,1314, 1248,1116, 723, 544 | N.A. |
| Step 8 | $C_{17}H_{26}NO$ ([M+H]$^+$) 260.2016 | 9.68 (d, J = 1.6 Hz, 1H), 7.42 (ddt, J = 7.3, 2.2, 1.1 Hz, 2H), 7.27 (dd, J = 8.4, 6.9 Hz, 2H), 7.19 - 7.10 (m, 1H), 3.84 (s, 2H), 2.70 (ttd, J = 12.9, | 204.68, 145.44, 127.97, 126.70, 125.80, 54.95, 47.87, 42.94, 40.54, 33.73, 21.92 | N.A. | 78° C | 2971, 1718, 1492,1371, 1267, 1173, 723 | N.A. |
| | | 3.3, 1.6 Hz, 1H), 1.78 (ddt, J = 13.0, 2.9, 1.3 Hz, 2H), 1.62 - 1.49 (m, 2H), 1.14 (s, 6H), 1.01 (s, 6H) | | | | | |
| Step 9 | $C_{30}H_{38}NO_2$ ([M+H]$^+$) 444,2906 | 8.22 (dddd, J = 11.6, 8.3, 1.4, 0.7 Hz, 1H), 8.09 (dddd, J = 13.3, 8.4, 1.4, 0.7 Hz, 1H), 7.58 - 7.39 (m, 4H), 7.29 (tq, J = 7.7, 1.6 Hz, 2H), 7.20 - 7.12 (m, 1H), 6.96 (dd, J = 16.1, 1.2 Hz, 1H), 6.91 (s, 1H), 6.28 (dd, J = 16.1, 6.9 Hz, 1H), 4.05 - 3.95 (m, 3H), 3.90 (d, J = 16.3 Hz, 4H), 3.88 (s, 1H), 3.82 (s, 1H), 1.75 (ddd, J = 11.7, 3.5, 1.5 Hz, 2H), 1.67 - 1.59 (m, OH), 1.60 (s, 1H), 1.59 - 1.48 (m, 2H), 1.36 - 1.25 (m, 1H), 1.21 (s, 4H), 1.04 (d, J = 22.2 Hz, 6H), 0.97 (s, 2H) | 152.09, 151.71, 151.40, 147.56, 146.79, 146.03, 145.91, 138.63, 137.03, 129.10, 128.89, 127.89, 126.84, 126.80, 126.72, 126.59, 126.36, 126.06, 125.69, 125.66, 125.46, 125.36, 124.70, 123.93, 122.58, 122.45, 122.36, 122.33, 122.18, 122.11, 121.63, 107.00, 105.50, 100.84, 62.38, 61.75, 55.83, 55.75, 55.33, 55.03, 47.93, 47.87, 47.79, 34.01, 33.90, 32.99, 22.33, 22.10 | N.A. | < 50° C | 2965, 1590, 1458,1377, 1216 | N.A. |

(continued)

| | MS | $^{H}$ NMR | $^{C}$ NMR | $^{P}$ NMR | Mp (°C) | IR | RPE |
|---|---|---|---|---|---|---|---|
| Step 10 | $C_{23}H_{34}NO_2$ ([M+H]$^+$) 356.2587 | 7.60 (d, J = 8.3 Hz, 1H), 7.42 (d, J = 8.3 Hz, 1H), 6.95 (t, J = 7.5 Hz, 1H), 6.85 (t, J = 7.5 Hz, 1H), 6.18 (s, 1H), 3.43 (s, 3H), 3.31 (s, 3H), 2.76 (s, 4H), 2.33 (d, J = 7.4 Hz, 2H), 1.40 (m, 3H), 1.16 (d, J = 7.6 Hz, 2H), 0.87 (s, 6H), 0.84 (s, 6H), 0.81 - 0.65 (m, 4H). | 153.57, 148.28, 131.07, 130.07, 127.77, 127.06, 126.01, 123.46, 122.79, 106.87, 62.80, 58.46, 56.63, 43.15, 38.42, 31.11, 28.47, 28.18, 25.43 | N.A. | 96° C | 3412, 2937, 1596, 1460, 1371, 1230, 1089, 999, 769 | N.A. |
| Step 11 | $C_{23}H_{32}NO_3$ ([M]$^-$) 370.2397 | N.A. | N.A. | N.A. | < 50° C | 2937, 1582, 1454, 1366, 1363, 1243, | Singlet between 3300 and |
| | | | | | | 1087, 1012, 770 | 3400 Gauss |
| Step 12 | $C_{23}H_{32}NO_3$ ([M]$^-$) 340.1913 | N.A. | N.A. | N.A. | > 200 °C | 2937, 1668, 1594, 1459, 1363, 1268, 1104, 848, 713 | Singlet between 3300 and 3400 Gauss |

Preparation of an OMRM compound of formula (1b) according to the invention: pBQ-$CH_2$-TEMPO (OMRM2)

Step 1: Synthesis of 2-(bromomethyl)-1,4-dimethoxybenzene 1

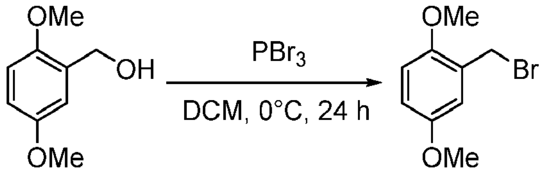


**1**

ρ = quant

4.2 g (3.58 mL, 25 mmol) of (2,5-dimethoxyphenyl)methanol were dissolved in 125 mL of $CH_2Cl_2$ and cooled to 0°C under argon. 4.70 mL of $PBr_3$ (2 eq., 50 mmol) were then added dropwise under vigorous stirring. The reaction was stirred at 0°C for 2 h and then allowed to warm to room temperature overnight. The reaction was quenched by a dropwise addition of aqueous saturated solution of sodium bicarbonate up to the end of gas evolution. The mixture was then washed thrice with 100 mL of deionised water and the organic phase was dried over anhydrous $MgSO_4$. The mixture was concentrated under reduced pressure and **1** was obtained as a white powder without further purification with a quantitative yield (5.77 g, 25 mmol). Mp = 76°C. $^1$H NMR (400 MHz, $CDCl_3$) $\delta$ = 6.92 (dd, J = 3.5, 1.2, 1H), 6.83 (d, J = 5 Hz, 1H), 6.83 (s, 1H), 4.55 (s, 2H), 3.85 (s, 3H), 3.77 (s, 3H) ppm. $^{13}$C NMR (100 MHz, $CDCl_3$) $\delta$ = 153.46, 151.69,

126.98, 116.42, 115.05, 112.24, 56.21, 55.77, 28.86 ppm. HRMS (ASAP$^+$) for $C_9H_{12}{}^{79}BrO_2$ ([M+ H]$^+$), calculated m/z = 231.0021; found 231.0024. IR (KBr pellet, $cm^{-1}$): 3404, 2962, 1588, 1501, 1461, 1417, 1321, 1286, 1238, 1207, 1107, 809, 709.

Step 2: Synthesis of (2,5-dimethoxybenzyl)triphenylphosphonium bromide **2**

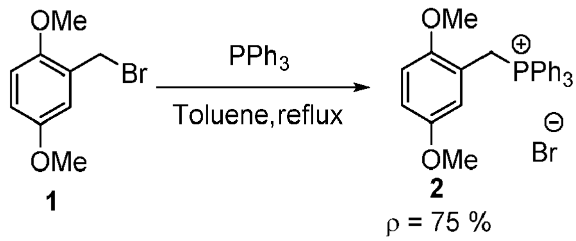


**1**

**2**

ρ = 75 %

5.27 g (22.8 mmol) of 2-(bromomethyl)-1,4-dimethoxybenzene **1** were dissolved in 375 mL of toluene and 14.7 g (2,5 eq., 56 mmol) of triphenylphosphine were then slowly added to the solution. The reaction mixture was stirred at reflux for 48 h. The precipitate was filtered, washed with diethyl ether, and dried under vacuum at room temperature for 4 h to afford 2 as a white solid in a yield of 75% (8.44 g, 17.1 mmol). Mp = 220°C. $^1$H NMR (400 MHz, $CDCl_3$) δ = 7.78 - 7.68 (m, 3H), 7.66 - 7.54 (m, 12H), 6.95 (t, J = 2.9 Hz, 1H), 6.72 (dt, J = 9.0, 2.9 Hz, 1H), 6.50 (dd, J = 9.0, 0.9 Hz, 1H), 5.07 (d, J = 13.9 Hz, 2H), 3.52 (s, 3H), 3.13 (s, 3H) ppm. $^{13}$C NMR (100 MHz, $CDCl_3$) δ = 153.54 (d, J = 3.7 Hz), 151.38 (d, J = 5.6 Hz), 134.95 (d, J = 3.1 Hz), 134.25 (d, J = 9.7 Hz), 130.05 (d, J = 12.4 Hz), 118.23 (d, J = 84.9 Hz), 117.49 (d, J = 5.3 Hz), 116.10 (d, J = 4.2 Hz), 115.92 (d, J = 9.2 Hz), 111.31 (d, J = 3.3 Hz), 56.03, 55.07, 25.66 (d, J = 47.9 Hz) ppm. $^{31}$P NMR (162 MHz, $CDCl_3$) δ = 21.9 ppm. HRMS (ASAP$^+$) for $C_{27}H_{26}O_2P^+$ ([M-Br$^-$]$^+$), calculated m/z = 413.1670; found 413.1673. IR (KBr pellet, $cm^{-1}$): 3415, 3013, 1503, 1438, 1228, 1110, 1044, 751.

Step 3: Synthesis of 1-benzyl-2,2,6,6-tetramethylpiperidin-4-one **3**

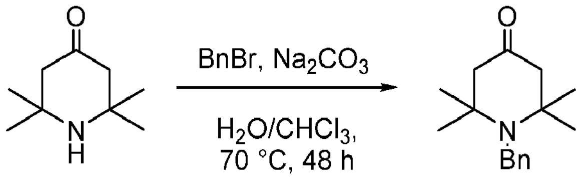


**3**

ρ = 45 %

To a 10.1 g (65 mmol) of 2,2,6,6-tetramethylpiperidinone solution in 80 mL of a biphasic $H_2O/CHCl_3$ solution (1/1, v/v) were added 20.7 g (3 eq., 195 mmol) of sodium carbonate and 7.7 mL (1 eq., 65 mmol) of benzylbromide. The reaction mixture was refluxed at 70°C for 48 h and was then diluted with 100 mL of a biphasic $H_2O/CHCl_3$ solution (1/1, v/v). The phases were separated, then the aqueous phase was extracted twice with 50 mL of chloroform. The reunited organic phases were washed with, successively, 10 mL of 1M HCl, 50 mL of brine and twice with 50 mL of water, then dried over $MgSO_4$ and filtered. The solvent was removed under reduce pressure and the resulting product was purified by flash chromatography (silica gel, heptane-EtOAc, 9:1) to afford **6** as a crystalline white solid with a yield of 45% (7.18 g, 29.3 mmol). **6** is thermosensitive and was kept at -15°C. Mp = 106 °C. $^1$H NMR (400 MHz, $CDCl_3$) δ = 7.52 - 7.44 (m, 2H), 7.35 - 7.27 (m, 2H), 7.23 - 7.14 (m, 1H), 3.92 (s, 2H), 2.47 (s, 4H), 1.13 (s, 12H) ppm. $^{13}$C NMR (100 MHz, $CDCl_3$) δ = 209.95, 144.75, 128.15, 126.68, 126.04, 60.17, 56.02, 47.73 ppm. HRMS (ASAP$^+$) for $C_{16}H_{24}NO$ ([M+H]$^+$), calculated m/z = 246.1858; found 246.1862. IR (KBr pellet, $cm^{-1}$): 2983, 1712, 1490, 1314, 1252, 1044, 709.

Step 4: Synthesis of 1-benzyl-4-(2,5-dimethoxybenzylidene)-2,2,6,6-tetramethylpiperidine **4**

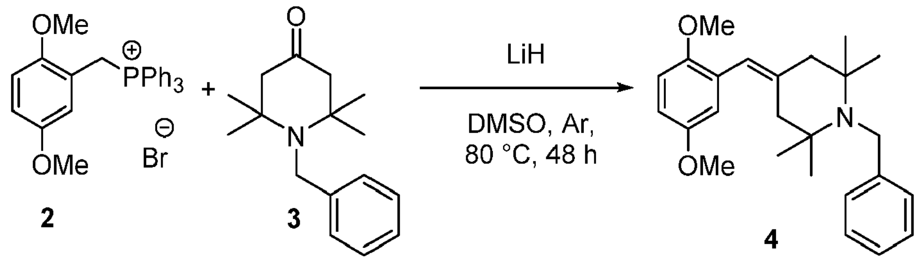


2 3 4

ρ = 65 %

Under inert atmosphere, 17.2 mg of LiH (2.16 mmol) were suspended in 3 mL of dry DMSO. The suspension was stirred at 80°C for 1 h, and then cooled to 0°C. A solution of 1.07 g (1 eq., 2.16 mmol) of the phosphonium salt **2** in 9 mL of dry DMSO was then carefully added with the reaction medium turning quickly red, indicating the formation of the phosphorus ylide intermediate. After 20 min, 532 mg (1 eq., 2.16 mmol) of ketone **3** were added and the reaction mixture was stirred at 80°C for 4 days. The reaction mixture was then poured over ice, the aqueous phase was extracted thrice with 15 mL of diethyl ether, and the reunited organic phases were dried over anhydrous $MgSO_4$. The solvent was removed under reduced pressure and after a flash column chromatography purification (silica gel, heptane-EtOAc, 9:1), **4** was obtained as a white crystalline solid with a yield of 65% (533 mg, 1.40 mmol). Mp = 94 °C. $^1H$ NMR (400 MHz, $CDCl_3$) δ = 7.49 (d, J = 8.2 Hz, 2H), 7.29 (t, J = 7.6 Hz, 2H), 7.16 (t, J = 7.6 Hz, 1H), 6.86 (d, J = 3.0 Hz, 1H), 6.82 (d, J = 8.8 Hz, 1H), 6.75 (dd, J = 8.9, 3.0 Hz, 1H), 6.38 (s, 1H), 3.83 (s, 2H), 3.80 (s, 3H), 3.78 (s, 3H), 2.38 (s, 2H), 2.33 (s, 2H), 1.08 (s, 6H), 0.99 (s, 6H) ppm. $^{13}C$ NMR (100 MHz, $CDCl_3$) δ = 153.16, 151.78, 145.71, 137.67, 128.16, 127.76, 126.67, 125.52, 120.74, 116.24, 111.85, 111.80, 57.49, 57.31, 56.31, 55.75, 52.05, 47.97, 27,69 ppm. HRMS ($ASAP^+$) for $C_{25}H_{34}NO_2$ ($[M+H]^+$), calculated m/z = 380.2590; found 380.2595. IR (KBr pellet, $cm^{-1}$): 2965, 1604, 1490, 1368, 1268, 1214, 1175, 1044, 720.

Step 5: Synthesis of 4-(2,5-dimethoxybenzyl)-2,2,6,6-tetramethylpiperidine **5**

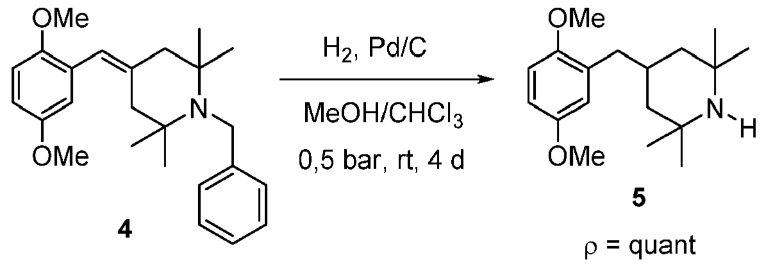


4 5

ρ = quant

Under inert atmosphere, 200 mg of **4** (0.569 mmol) were dissolved in 9 mL of a $CHCl_3$/MeOH (1/2, v/v) solution. 100 μL of acetic acid and 400 mg of Pd/C (5 wt %, ratio **4**/(Pd/C): 1/2, w/w) were then added and the reaction vessel was purged with 0.5 bar of hydrogen for 30 min. The reaction mixture was stirred with a constant overall pressure of 1.5 bar for 5 days at room temperature, then filtered over celite and washed with chloroform. The solvent was concentrated under reduced pressure and the resulting product was dissolved again in chloroform, filtered over celite, washed with chloroform and concentrated under reduced pressure to afford **5** as a white solid product with a quantitative yield (166 mg, 0.569 mmol). Mp = 135 °C. $^1H$ NMR (400 MHz, MeOD) δ = 6.88 (d, J = 8.8 Hz, 1H), 6.76 (dd, J = 8.8, 2.8 Hz, 1H), 6.72 (d, J = 3.0 Hz, 1H), 3.78 (s, 3H), 3.74 (s, 3H), 2.58 (d, J = 7.0 Hz, 2H), 2.28 (m, 1H), 1.72 (dd, J = 14.4, 3.2 Hz, 2H), 1.40 (s, 12H), 1.28 (t, J = 13.4 Hz, 2H) ppm. $^{13}C$ NMR (100 MHz, MeOD) δ = 154.96, 153.38, 129.70, 118.40, 112.73, 112.68, 111.40, 58.17, 56.41, 56.06, 42.78, 37.67, 30.83, 29.50, 25.09 ppm. HRMS ($ASAP^+$) for $C_{18}H_{30}NO_2$ ($[M+H]^+$), calculated m/z = 292.2277; found 292.2276. IR (KBr pellet, $cm^{-1}$): 1500, 1377, 1267, 1228, 1126, 1026, 713.

Step 6: Synthesis of 4-(2,5-dimethoxybenzyl)-2,2,6,6-tetramethylpiperidin-1-oxy **6**

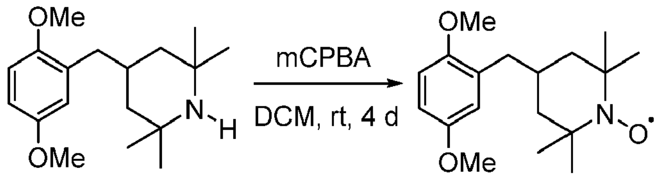


5 6

ρ = 35 %

Under inert atmosphere, to a 400 mg (1.37 mmol) solution of **5** in 15 mL of $CH_2Cl_2$, were added dropwise a solution of 945 mg of *m*CPBA (4 eq., 5.48 mmol) in 20 mL of $CH_2Cl_2$. The reaction was stirred at room temperature for 4 days. The orange mixture was then washed thrice with 20 mL of a saturated $NaHCO_3$ solution, dried over anhydrous $MgSO_4$ and filtered. The solvent was removed under reduced pressure and after a flash column chromatography purification (silica gel, cyclohexane-EtOAc, 4:1), **6** was obtained as an orange paste with a yield of 35% (147 mg, 0.48 mmol). HRMS (ASAP$^+$) for $C_{18}H_{29}NO_3$ ([M+H]$^+$), calculated m/z = 307.2147; found 307.2146. IR (KBr pellet, cm$^{-1}$): 1500, 1361, 1249, 1224, 1124, 1049, 713. EPR: singlet between 3300 and 3400 Gauss.

Step 7: Synthesis of pBQ-$CH_2$-TEMPO **7** (OMRM2)

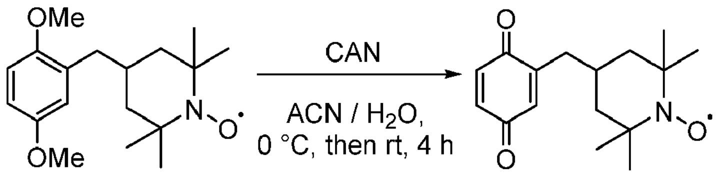


6 7

ρ = 25 %

To a 57 mg (0.186 mmol) solution of **6** in 5 mL of acetonitrile were added dropwise at 0°C a 312 mg (3 eq., 0.559 mmol) solution of CAN in 5 mL of deionised water. The reaction was then warmed to room temperature and stirred for 4 h. The phases were separated and the aqueous phase was extracted thrice with 20 mL of $CHCl_3$. The reunited organic phases were backwashed thrice with 30 mL of deionised water, dried over anhydrous $MgSO_4$ and filtered. The solvent was removed under reduced pressure and after a flash column chromatography purification (silica gel, cyclohexane-EtOAc, 4:1), **7** was obtained as a purple solid with a yield of 25% (12.9 mg, 46.5 μmol). Mp = 55 °C. HRMS (ASAP$^-$) for $C_{16}H_{22}NO_3$ ([M]$^-$), calculated m/z = 276.1600; found 276.1602. IR (KBr pellet, cm$^{-1}$): 2933, 1655, 1500, 1249, 1224, 1132, 1078, 1049, 713. EPR: singlet between 3300 and 3400 Gauss.

Characterisation of the *p*-BQ-$CH_2$-TEMPO compound of formula (1b):

The equipment and techniques of characterization were the same as those previously described and used to characterize the 1,4-naphthoquinone-$(CH_2)_2$-TEMPO compound of formula (1a).

Table 2:

| | MS | $^{H}$ NMR | $^{C}$ NMR | $^{P}$ NMR | Mp (°C) | IR | RPE |
|---|---|---|---|---|---|---|---|
| Step 1 | $C_9H_{12}{}^{79}BrO_2$ ([M+ H]$^+$), 231.0024 | 6.92 (dd, J = 3.5, 1.2, 1H), 6.83 (d, J = 5 Hz, 1H), 6.83 (s, 1H), 4.55 (s, 2H), 3.85 (s, 3H), 3.77 (s, 3H) | 153.46, 151.69, 126.98, 116.42, 115.05, 112.24, 56.21, 55.77, 28.86 | N.A | 76 °C | 3404, 2962, 1588, 1501, 1461,1417, 1321, 1286, 1238, 1207, 1107, 809, 709 | N.A |

(continued)

| | MS | H NMR | C NMR | P NMR | Mp (°C) | IR | RPE |
|---|---|---|---|---|---|---|---|
| Step 2 | $C_{27}H_{26}O_2P^+$ ([M-Br⁻]⁺), 413.1673 | 7.78 - 7.68 (m, 3H), 7.66 - 7.54 (m, 12H), 6.95 (t, J = 2.9 Hz, 1H), 6.72 (dt, J = 9.0, 2.9 Hz, 1H), 6.50 (dd, J = 9.0, 0.9 Hz, 1H), 5.07 (d, J = 13.9 Hz, 2H), 3.52 (s, 3H), 3.13 (s, 3H) | 153.54 (d, J = 3.7 Hz), 151.38 (d, J = 5.6 Hz), 134.95 (d, J = 3.1 Hz), 134.25 (d, J = 9.7 Hz), 130.05 (d, J = 12.4 Hz), 118.23 (d, J = 84.9 Hz), 117.49 (d, J = 5.3 Hz), 116.10 (d, J = 4.2 Hz), 115.92 (d, J = 9.2 Hz), 111.31 (d, J = 3.3 Hz), 56.03, 55.07, 25.66 (d, J = 47.9 Hz) | 21.9 | 220 °C | 3415, 3013, 1503,1438, 1228,1110, 1044, 751 | N.A. |
| Step 3 | $C_{16}H_{24}NO$ ([M+H]⁺) 246.1862 | 7.52 - 7.44 (m, 2H), 7.35 - 7.27 (m, 2H), 7.23 - 7.14 (m, 1H), 3.92 (s, 2H), 2.47 (s, 4H), 1.13 (s, 12H) | 209.95, 144.75, 128.15, 126.68, 126.04, 60.17, 56.02, 47.73 | N.A. | 106 °C | 2983, 1712, 1490,1314, 1252, 1044, 709 | N.A. |
| Step 4 | $C_{25}H_{34}NO2$ ([M+H]⁺) 380.2590 | 7.49 (d, J = 8.2 Hz, 2H), 7.29 (t, J = 7.6 Hz, 2H), 7.16 (t, J = 7.6 Hz, 1H), 6.86 (d, J = 3.0 Hz, 1H), 6.82 (d, J = 8.8 Hz, 1H), 6.75 (dd, J = 8.9, 3.0 Hz, 1H), 6.38 (s, 1H), 3.83 (s, 2H), 3.80 (s, 3H), 3.78 (s, 3H), 2.38 (s, 2H), 2.33 (s, 2H), 1.08 (s, 6H), 0.99 (s, 6H) | 153.16, 151.78, 145.71, 137.67, 128.16, 127.76, 126.67, 125.52, 120.74, 116.24, 111.85, 111.80, 57.49, 57.31, 56.31, 55.75, 52.05, 47.97, 27,69 | N.A. | 94 °C | 2965, 1604, 1490,1368, 1268,1214, 1175, 1044, 720 | N.A. |
| Step 5 | $C_{18}H_{30}NO_2$ ([M+H]⁺) 292.2277 | 6.88 (d, J = 8.8 Hz, 1H), 6.76 (dd, J = 8.8, 2.8 Hz, 1H), 6.72 (d, J = 3.0 Hz, 1H), 3.78 (s, 3H), 3.74 (s, 3H), 2.58 (d, J = 7.0 Hz, 2H), 2.28 (m, 1H), 1.72 (dd, J = 14.4, 3.2 Hz, 2H), 1.40 (s, 12H), 1.28 (t, J = 13.4 Hz, 2H) | 154.96, 153.38, 129.70, 118.40, 112.73, 112.68, 111.40, 58.17, 56.41, 56.06, 42.78, 37.67, 30.83, 29.50, 25.09 | N.A. | 135 °C | 1500, 1377, 1267, 1228, 1126, 1026, 713 | N.A. |
| Step 6 | $C_{18}H_{29}NO_3$ ([M+H]⁺) 307.2147 | N.A. | N.A. | N.A. | N.A | 1500, 1361, 1249, 1224, 1124, 1049, 713 | Singlet between 3300 and 3400 Gauss |
| Step 7 | $C_{16}H_{22}NO_3$ ([M]-) 276.1600 | N.A. | N.A. | N.A. | 55 °C | 2933, 1655, 1500, 1249, 1224, 1132, 1078, 1049, 713 | Singlet between 3300 and 3400 Gauss |

*Preparation of the neat electrolyte:*

Different electrolyte solutions a) to h) were prepared by dissolving:

a) 1.0 molar (M) bis(trifluoromethane)sulfonimide lithium salt (LiTFSI, BASF) in tetraethylene glycol dimethyl ether (TEGDME, Sigma Aldrich, moisture controlled grade);
b) 1.0 M LiTFSI and $10^{-2}$ M *para*-benzoquinone (pBQ, Sigma Aldrich) in TEGDME;
c) 1.0 M LiTFSI and $10^{-2}$ M 1,4-naphthoquinone (Sigma Aldrich) in TEGDME;
d) 1.0 M LiTFSI and $10^{-2}$ M 2,2,6,6-tetramethylpiperidinoxy (TEMPO, Sigma Aldrich) in TEGDME;
e) 1.0 M LiTFSI and $10^{-2}$ M TEMPO and $10^{-2}$ M pBQ in TEGDME;
f) 1.0 M LiTFSI and $10^{-2}$ M TEMPO and $10^{-2}$ M 1,4-napthoquinone in TEGDME.
g) 1.0 M LiTFSI and $10^{-2}$ M OMRM2 (pBQ-$CH_2$-TEMPO) in TEGDME.
h) 1.0 M LiTFSI and $10^{-2}$ M OMRM1 (1,4-napthoquinone-$(CH_2)_2$-TEMPO) in TEGDME.

Before preparing the electrolyte solutions, the raw materials (LiTFSI, pBQ, 1,4-naphthoquinone, TEMPO) were dried at 100°C overnight under vacuum, while TEGDME solvent was used after drying/storage on regenerated 3 Å molecular sieves (Sigma Aldrich) for at least 15 days in a glovebox. The water content in the solvent and in the electrolytes was determined by means 831KF Karl Fischer coulometer (Metrohm) technique and was measured to be lower than 4 ppm.

*Preparation of cyclic voltammetry (CV) experiments:*

Cyclic voltammetry experiments were performed using a three electrode set up hermetically enclosed in a glass vessel in order to avoid any water entrance during oxygen filling. This cell was built, filled with neat electrolytes and closed inside the argon filled glove box. Then the cell was purged outside the glove box with pure oxygen having the gas bubbling in the solution. Oxygen gas (99.999%, Praxair) was used. The gas was bubbled through the solution via a Teflon tube for 30 minutes.

All electrochemical measurements were performed using a VMP multichannel potentiostats/galvanostats (Biologic, France) controlled with EC lab software. The working electrode used was a gold electrode (diameter = 1.6 mm). The real reference electrode was precharged (to give to the active material a state of charge around 20%) LFP (LFP/FP: 80/20) in a glass tube filled with a 1 M LiTFSI TEGDME solution. The reference tube was assembled at least 30 minutes prior to the electrochemical measurement. A platinum foil was used as counter electrode. The electrochemical cell was placed in a temperature chamber (CTS) at 25.0 ± 0.2°C.

*Preparation of $LiFePO_4$ (LFP) electrode:*

%wt composition: 91% of active material (LFP)
Coating thickness (without aluminium foil): 68 μm
Aluminium foil thickness: 15 μm ($\rho_{Al}$ = 2.7 g $cm^{-3}$)
Coating loading: 120 $g.m^{-2}$ (12 $mg.cm^{-2}$)
Specific capacity: 127 $mAh.g^{-1}$

The LFP electrodes used for the tests were punched 12.7 mm diameter discs (area: 1.2667 $cm^2$). The LFP electrodes were used as a counter electrode for all tests for standardization purposes. Recorded voltages ($V_{vs\ LFP}$) were reported vs $Li/Li^+$ ($V_{vs\ Li}$) according to the equation:

$$V_{vs\ Li} = 3.45\ V - V_{vs\ LFP}$$

*$O_2$ electrode:*

Carbon paper (GDL H1410 Quintec, Germany) was used as air cathode allowing very similar reproducibility on available surface for $Li_2O_2$ formation.

*Assembly of the cell:*

The OMRM compounds of formula (1) of the invention were compared to other soluble catalysts (pBQ, 1,4-napthoquinone and TEMPO) in the same experimental conditions, using a LFP electrode. Therefore, the tests were done in a configuration LFP/electrolyte/$O_2$ electrodes.

Similarly to the cathodes, LFP and separators were dried at 120°C overnight under vacuum and all the cell components (modified Swagelok and designed airtight containers) were dried in an oven at 70°C for 12h before usage.

Modified Swagelok cells with an opening to atmosphere were assembled using as anode a disc of pure lithium metal (ø = 11 mm and about 0.7 mm in thickness) or a disc of LFP with ø = 12.7 mm, 0.068 mm in thickness and 9.4 mg in weight of active material. Two pieces of glass fibre separators (Whatman, ø = 13 mm) impregnated with 210 μL electrolyte were used as separators. The prepared carbon-based electrodes were used as working electrodes. Before transferring the assembled Swagelok cells out of the glovebox, they were placed inside a special designed airtight container with inlet and outlet valves. Some Swagelok cells in the containers were kept under argon while the other containers were filled with a continuous relatively high flow of dry oxygen (99.99% purity, spilled from a high-pressure cylinder through a stainless steel gas lines) for 30 minutes.

According to the protocol described above, the following lithium-air cells were prepared with the different electrolyte solutions:

- Comparative example CE1 corresponds to a lithium-air cell with electrolyte a),
- Comparative example CE2 corresponds to a lithium-air with electrolyte b),
- Comparative example CE3 corresponds to a lithium-air cell with electrolyte c),
- Comparative example CE4 corresponds to a lithium-air cell with electrolyte d),
- Comparative example CE5 corresponds to a lithium-air cell with electrolyte e),
- Comparative example CE6 corresponds to a lithium-air cell with electrolyte f),
- Example E1 corresponds to a lithium-air cell with electrolyte g),
- Example E2 corresponds to a lithium-air cell with electrolyte h).

The test performances of the lithium-air cells prepared with different electrolyte solutions are shown on **Figures 2** to **13.**

**Figure 2** compares CV obtained at 10 mV/s under argon and under oxygen with electrolyte a) used in CE1 cell and electrolyte g) used in E1 cell.

Electrolyte a) shows no catalytic effect as no reversible electrochemical processes are observed on CV experiment. Electrolyte g) shows a reversible electrochemical process but no significant difference of current intensity is observed on Ar and $O_2$ atmospheres showing a non-detectable $O_2$ catalytic effect with electrolyte g).

**Figure 3** compares CV obtained at 10mV/s under argon and under oxygen with electrolyte a) used in CE1 cell and electrolyte h) used in E2 cell.

Electrolyte a) shows no catalytic effect as no reversible electrochemical processes are observed on CV experiment. Electrolyte h) shows a reversible electrochemical process with a significant difference of current intensity observed on Ar and $O_2$ atmospheres showing detectable $O_2$ catalytic effect with electrolyte h).

**Figure 4** compares galvanostatic charge and discharge at 0.2 $mA.cm^{-2}$ obtained for CE1 cell and E1.

E1 cell with electrolyte g) shows a higher capacity than CE1 cell containing electrolyte a) during both charge and discharge of the initial cycle.

**Figure 5** compares galvanostatic charge and discharge at 0.2 $mA.cm^{-2}$ obtained for CE1 cell and E2.

E2 cell with electrolyte h) shows a much higher capacity than CE1 cell containing electrolyte a) during both charge and discharge.

**Figure 6** shows the capacity retention versus cycle number from CE1 cell at 0.2 $mA.cm^{-2}$ rate.

Limited capacity is observed from CE1 cell lower than 20 $mAh.g^{-1}{}_{GDL}$ for both charge and discharge.

**Figure 7** shows the capacity retention versus cycle number from CE2 cell at 0.2 $mA.cm^{-2}$ rate.

Limited capacity is observed from CE2 cell lower than 20 $mAh.g^{-1}{}_{GDL}$ for both charge and discharge.

**Figure 8** shows the capacity retention versus cycle number from CE3 cell at 0.2 $mA.cm^{-2}$ rate.

Limited capacity is observed from CE3 cell lower than 30 $mAh.g^{-1}{}_{GDL}$ for both charge and discharge.

**Figure 9** shows the capacity retention versus cycle number from CE4 cell at 0.2 $mA.cm^{-2}$ rate.

Limited capacity is observed from CE4 cell lower than 150 $mAh.g^{-1}{}_{GDL}$ for charge and lower than 80 $mAh.g^{-1}{}_{GDL}$ for discharge. Such low coulombic efficiency indicates that a part of the capacity is related to unwanted side reactions.

**Figure 10** shows the capacity retention versus cycle number from CE5 cell at 0.2 $mA.cm^{-2}$ rate.

Limited capacity is observed from CE5 cell lower than 80 $mAh.g^{-1}{}_{GDL}$ for charge and discharge.

**Figure 11** shows the capacity retention versus cycle number from CE6 cell at 0.2 $mA.cm^{-2}$ rate.

Limited capacity is observed from CE6 cell lower than 30 $mAh.g^{-1}{}_{GDL}$ for charge and discharge.

**Figure 12** shows the capacity retention versus cycle number from E1 cell at 0.2 $mA.cm^{-2}$ rate.

Limited capacity is observed from E1 cell lower than 120 $mAh.g^{-1}{}_{GDL}$ for charge and discharge of cycle 1 to 21 and lower than 120 $mAh.g^{-1}{}_{GDL}$ for charge and discharge of cycle 36 to 50.

**Figure 13** shows the capacity retention versus cycle number from E2 cell at 0.2 $mA.cm^{-2}$ rate.

Limited capacity is observed from E2 cell lower than 120 $mAh.g^{-1}{}_{GDL}$ for charge and discharge.

Comparison with prior art organic catalysts used in lithium-air battery cells:

The following Table 3 summarizes properties of organic catalysts used in lithium-air battery cells of the prior art.

Table 3:

| | Formula | Electrolyte | Rate max ($mA/cm^2$) | Activity | p/n type |
|---|---|---|---|---|---|
| pBQ-$CH_2$-TEMPO | | 1M LiTFSI in TEGDME | 0.2 $mA/cm^2$ | ORR+OER | n+p type |
| 1,4-napthoquinone-$(CH_2)_2$-TEMPO | | 1M LiTFSI in TEGDME | 0.2 $mA/cm^2$ | ORR+OER | n+p type |
| DBBQ | 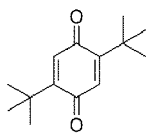 | 1M LiTFSI in DME or TEGDME | NA (unit $mA/cm^2$ areal and electrolyte different) | ORR | n type |
| TetraThiaFulvalene (TTF) | 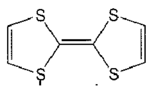 | 1M $LiClO_4$ in DMSO | NA (unit g-gold and electrolyte different) | OER | p type |
| DBBQ + TEMPO | | 0.3M $LiClO_4$ in DME | NA (unit $mA/cm^2$ areal and electrolyte different) | ORR + OER | p + n type |
| 4-Methoxy-2,2,6,6-tetra methyl piperidinyl-1-oxyl (MeO-TEMPO) | 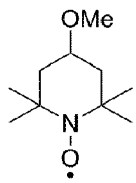 | | | OER | p type |
| Nitroxides redox mediator 1-Me-AZADO | 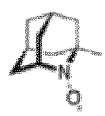 | 1M LiTFSI in diglyme | 0.1 $mA/cm^2$ | OER | p type |
| Tris[4-(diethylaminophenyl]a mine (TDPA) | 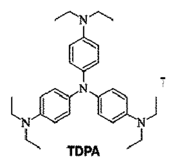 | 0.5M LiTSFI in TEGDME | 0.1 $mA/cm^2$ | OER | p type |
| Anthraquinone (AQ) | 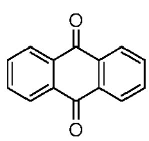 | 1M LiTFSI in TEGDME | 500 mA/g | ORR | n type |

(continued)

| | Formula | Electrolyte | Rate max ($mA/cm^2$) | Activity | p/n type |
|---|---|---|---|---|---|
| 1,4-Naphthoquinone (NQ) | 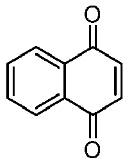 | 1M LiTFSI in TEGDME | 500 mA/g | ORR | n type |
| Dimethylphenazine (DMPZ) | 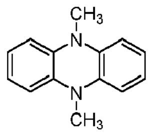 | 1M LiTFSI in TEGDME | 0.1 $mA/cm^2$ | OER | p type |
| N-methyl phenothiazine (MPT) | 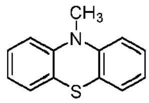 | 1M TfOLi in TEGDME | 150 mA/g | OER | p type |
| N,N,N,N'-tetramethyl-p-phenylenediamine (TMPD) | 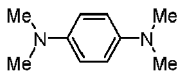 | 1M LiTFSI in TEGDME | 100 mA/g | OER | p type |
| 1,2-dimethyl-3-(4-(2,2,6,6-tetramethyl-1-oxyl-4-piperidoxyl)-pentyl)imidazolium bis (trifluoromethane)sulfoni mide (IL-TEMPO) | 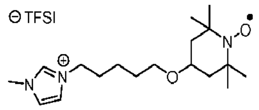 | 0.5M LiTSFI in DEGDME | 0.1 $mA/cm^2$ | ORR+OER | n+p type |

## Claims

**1.** A metal M-air battery cell comprising:

- a negative electrode containing a negative-electrode active material,
- a positive electrode using oxygen as a positive-electrode active material, and
- a non-aqueous electrolyte medium arranged between the negative electrode and the positive electrode and comprising a metal M salt,

wherein the non-aqueous electrolyte medium comprises a compound of formula (1) comprising at least two different reversible Organic Redox Mediator Center terminations ORMC1• and ORMC2 connected together by linkers L1 and L2:

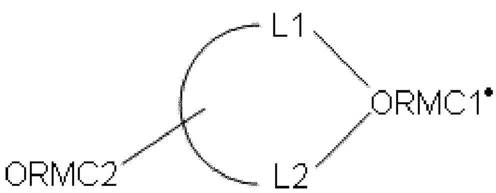

(1)

wherein:

- ORMC1• is at least one, and preferably one, redox active functional group which can reversibly react in a -0.08 - 1.5 V range vs standard hydrogen electrode (SHE), and preferably in a 3 - 4.5 V range vs $Li^+/Li^0$,

- ORMC2 is at least one, and preferably one, redox active functional group which can reversibly react in a -1 - -0.08 V range vs standard hydrogen electrode (SHE), and preferably in a 2 - 3 V range vs $Li^+/Li^0$,
- the linkers L1 and L2, identical or different, are linear or branched $C_{1-12}$ alkyl chains or wherein one of the linkers L1 or L2 is a single bond, the linear or branched $C_{1-12}$ alkyl chain being optionally substituted by a substituent selected from the group consisting of F, Cl, Br, I, OH, =O, COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, - HNR, -(O=)CHNR, -HN(O=)CR, -(O=)COR, -HN(O=)CHNR, -HN(O=)COR, - (HN=)CHNR, -HN(NH=)CHNR, -(S=)CHNR, -HN(S=)CHNR, with R being H or a linear or branched $C_{1-20}$ alkyl radical, or

the linkers L1 and L2 form together an alicyclic or aromatic $C_{3-10}$ ring-closed cycle with only one point of attachment with ORMC2, said point of attachment being a single bond or a linear or branched $C_{1-20}$ alkyl chain, the $C_{3-10}$ ring-closed cycle and/or the linear or branched $C_{1-20}$ alkyl chain between the $C_{3-10}$ ring-closed cycle and ORMC2 being optionally substituted by a substituent selected from the group consisting of F, Cl, Br, I, OH, =O, COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, - HNR, -(O=)CHNR, -HN(O=)CR, -(O=)COR, -HN(O=)CHNR, -HN(O=)COR, - (HN=)CHNR, -HN(HN=)CHNR, -(S=)CHNR, -HN(S=)CHNR, with R being H or a linear or branched $C_{1-20}$ alkyl radical, and
the linkers L1 and L2 optionally containing heteroatoms within their chains.

2. A metal M-air battery cell according to claim 1, wherein in the compound of formula (1) ORMC1$^{\bullet}$ is a free radical selected from the group consisting of - O$^{\bullet}$, -NO$^{\bullet}$, -S$^{\bullet}$, -N$^{\bullet}$.

3. A metal M-air battery cell according to claim 2, wherein in the compound of formula (1) ORMC1$^{\bullet}$ is -NO$^{\bullet}$.

4. A metal M-air battery cell according to any of claims 1 to 3, wherein in the compound of formula (1) ORMC2 is selected from the group consisting of quinone, -CN, -(O=)CR, -(S=)CR, -(N=)CR, -N=CRR', -(O=)SR, in which R and R', identical or different, are H or a linear or branched $C_{1-20}$ alkyl radical, the quinone or linear or branched $C_{1-20}$ alkyl radical being optionally substituted by a substituent selected from the group consisting of F, Cl, Br, I, OH, =O,COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, - (O=)CHNR, -HN(O=)CR, -(O=)COR, -HN(O=)CHNR, -HN(O=)COR, - (HN=)CHNR, -HN(NH=)CHNR, -(S=)CHNR, -HN(S=)CHNR, with R being H or a linear or branched $C_{1-20}$ alkyl radical.

5. A metal M-air battery cell according to claim 4, wherein in the compound of formula (1) ORMC2 is a quinone, preferably selected from the group consisting of 1,2-benzoquinone, 1,4-benzoquinone, 1,2-naphtoquinone, 1,4-naphtoquinone, 1,2-anthraquinone, 1,4-anthraquinone, 9,10-anthraquinone, 5,7,12,14-pentacenetetrone, and more preferably 1,4-benzoquinone or 1,4-naphtoquinone.

6. A metal M-air battery cell according to any of claims 1 to 5, wherein in the compound of formula (1) the linkers L1 and L2, identical or different, are linear or branched $C_{1-6}$ alkyl chains or wherein one of the linkers L1 or L2 is a single bond, the linear or branched $C_{1-6}$ alkyl chain being optionally substituted by a substituent selected from the group consisting of F, Cl, Br, I, OH, =O, COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, - (O=)CHNR, -HN(O=)CR, -(O=)COR, -HN(O=)CHNR, -HN(O=)COR, - (HN=)CHNR, -HN(NH=)CHNR, -(S=)CHNR, -HN(S=)CHNR, with R being H or a linear or branched $C_{1-20}$ alkyl radical.

7. A metal M-air battery cell according to any of claims 1 to 5, wherein in the compound of formula (1) the linkers L1 and L2 formed together an alicyclic $C_{3-10}$ ring-closed cycle with only one point of attachment with ORMC2, said point of attachment being a linear or branched $C_{1-12}$ alkyl chain, the $C_{3-10}$ ring-closed cycle and/or the linear or branched $C_{1-12}$ alkyl chain between the $C_{3-10}$ ring-closed cycle and ORMC2 being optionally substituted by a substituent selected from the group consisting of F, Cl, Br, I, OH, =O,COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, -(O=)CHNR, -HN(O=)CR, - (O=)COR, -HN(O=)CHNR, -HN(O=)COR, -(HN=)CHNR, -HN(NH=)CHNR, - (S=)CHNR, -HN(S=)CHNR, with R being H or a linear or branched $C_{1-20}$ alkyl radical.

**8.** A metal M-air battery cell according to any of claims 1 to 7, wherein the compound of formula (1) is of formula:

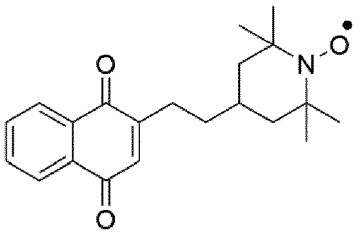

(1a)

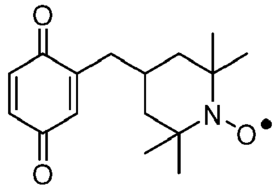

(1b)

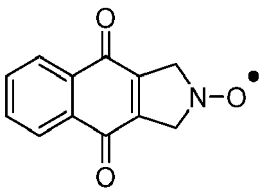

(1c)

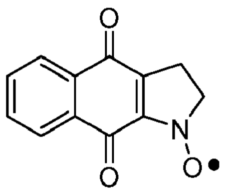

(1d)

**9.** A metal M-air battery cell according to any of claims 1 to 8, wherein the metal M is selected from the group of metals consisting of lithium (Li), sodium (Na), potassium (K), magnesium (Mg), calcium (Ca), aluminium (Al), zinc (Zn), hydrogen (H), or from the group of alloys combining one of said metal with indium (In), silicon (Si), carbon (C), tin (Sn), or bismuth (Bi), and preferably selected from the group consisting of lithium (Li), sodium (Na), potassium (K), magnesium (Mg), calcium (Ca), aluminium (Al), zinc (Zn), hydrogen (H).

**10.** A metal M-air battery cell according to claim 9, which is a lithium-air battery cell.

**11.** A metal M-air battery cell according to claim 9 or claim 10, wherein the negative electrode comprises a metal M selected from the group of metals consisting of lithium (Li), sodium (Na), potassium (K), magnesium (Mg), calcium (Ca), aluminium (Al), zinc (Zn), hydrogen (H), or from the group of alloys combining one of said metal with indium (In), silicon (Si), carbon (C), tin (Sn), or bismuth (Bi), preferably selected from the group consisting of lithium (Li), sodium (Na), potassium (K), magnesium (Mg), calcium (Ca), aluminium (Al), zinc (Zn), hydrogen (H), and more preferably lithium (Li).

**12.** A metal M-air battery cell according to any of claims 9 to 11, wherein the positive electrode comprises carbon.

**13.** A method for preparing a compound of formula (1) as defined in any of claims 1 to 8, comprising the steps of:

(i) forming an ethylenic bond by Wittig reaction between a compound bearing an ORMC2 derivative termination with at least one, and preferably at least two, $C_{1-20}$ alkoxy groups, and a compound bearing an ORMC1$^{\bullet}$ derivative termination with a free radical precursor protected by a protecting group, the compound bearing the ORMC2 derivative termination also bearing a phosphonium substituent and the compound bearing the ORMC1$^{\bullet}$ derivative

termination also bearing an aldehyde or ketone substituent or conversely the compound bearing the ORMC2 derivative termination also bearing an aldehyde or ketone substituent and the compound bearing the ORMC1• derivative termination also bearing a phosphonium substituent,

(ii) hydrogenating the compound obtained at the end of step (i) with $H_2$, in presence of a catalyst, preferably palladium on carbon (Pd/C), to convert the ethylenic bond into a carbon-carbon single bond and remove the protecting group of the free radical precursor, and

(iii) oxidizing the compound obtained at the end of step (ii) to convert the $C_{1-20}$ alkoxy groups into ketone functions and the free radical precursor into a free radical.

**14.** A method according to claim 13, wherein the oxidizing step (iii) is carried out in two sub-steps:

(iii-a) oxidizing the compound obtained at the end of step (ii) to convert the $C_{1-20}$ alkoxy groups into ketone functions, and

(iii-b) oxidizing the compound obtained at the end of step (iii-a) to convert the free radical precursor protected by a protecting group into a free radical.

**15.** A method according to claim 13 or claim 14, wherein the compound bearing an ORMC2 derivative termination with at least one $C_{1-20}$ alkoxy groups is a compound of one of the following formulas:

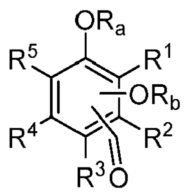

or

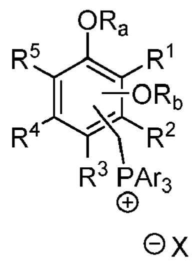

wherein:

- $R_a$ and $R_b$, identical or different, are $C_{1-20}$ alkoxy groups, preferably $C_{1-6}$ alkoxy groups, and more preferably $CH_3$,
- $R_1$, $R_2$, $R_3$, $R_4$ and $R_5$, independently of each other, are H or two of the adjacent radicals $R_1$, $R_2$, $R_3$, $R_4$ and $R_5$ form a $C_{4-8}$ aromatic ring, and preferably a $C_6$ aromatic ring,
- Ar is a $C_{4-8}$ aromatic ring, and preferably a $C_6$ aromatic ring, and
- $X^-$ is $F^-$, $Cl^-$, $Br^-$ or $I^-$.

**16.** A method according to any of claims 13 to 15, wherein the compound bearing an ORMC1• derivative termination with a free radical precursor protected by a protecting group is a compound of one of the following formulas:

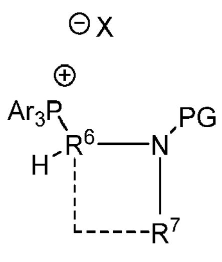

or

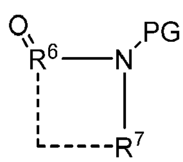

wherein:

- PG is a protecting group, preferably selected from benzyl, benzoyl, acetyl, *tert*-butyloxycarbonyl, 9-fluorenylmethyloxycarbonyl, tosyl, carbobenzyloxy, *p*-methoxybenzyl carbonyl, p-methoxybenzyl, 3,4-dimethoxybenzyl, more preferably benzyl, carbobenzyloxy, p-methoxybenzyl carbonyl, *p*-methoxybenzyl, 3,4-dimethoxybenzyl, and even more preferably benzyl,
- $R_6$ and $R_7$, identical or different, are linear or branched $C_{1-12}$ alkyl chains optionally substituted by a substituent selected from the group consisting of F, Cl, Br, I, OH, =O, COOH, $C_{1-20}$ aryl, $C_{1-20}$ alkyl, $C_{1-20}$ alkenyl, $C_{1-20}$

alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, -(O=)CHNR, -HN(O=)CR, -(O=)COR, - HN(O=)CHNR, -HN(O=)COR, -(HN=)CHNR, -HN(NH=)CHNR, -(S=)CHNR, - HN(S=)CHNR, with R being H or a linear or branched $C_{1-20}$ alkyl radical, or $R_6$ and $R_7$ form together an alicyclic or aromatic $C_{3-10}$ ring-closed cycle, optionally substituted by a linear or branched $C_{1-20}$ alkyl chain, the $C_{3-10}$ ring-closed cycle and/or the optional linear or branched $C_{1-20}$ alkyl chain present on the $C_{3-10}$ ring-closed cycle being optionally substituted by a substituent selected from the group consisting of F, Cl, Br, I, OH, =O, COOH, $C_{1-20}$ aryl, $C_{1-20}$ alkyl, $C_{1-20}$ alkenyl, $C_{1-20}$ alkaryl, $C_{1-20}$ alkoxy, $C_{1-20}$ aryloxy, $C_{1-20}$ amino-alkyl, $C_{1-20}$ amino-aryl, $C_{1-20}$ thio-alkyl, $C_{1-20}$ thio-aryl, $C_{1-20}$ alkyl phosphonate, $C_{1-20}$ aryl phosphonate, $C_{5-20}$ cyclodienyl, -OCR, -HNR, -(O=)CHNR, - HN(O=)CR, -(O=)COR, -HN(O=)CHNR, -HN(O=)COR, -(HN=)CHNR, - HN(HN=)CHNR, -(S=)CHNR, -HN(S=)CHNR, with R being H or a linear or branched $C_{1-20}$ alkyl radical, and $R_6$ and $R_7$ optionally containing heteroatoms within their chains, and

- $X^-$ is F, $Cl^-$, $Br^-$ or $I^-$.

**17.** A method according to any of claims 13 to 16, comprising the steps of:

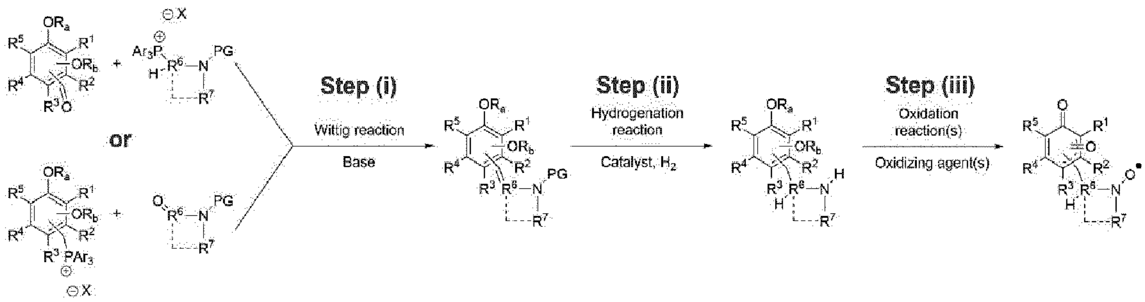


wherein $R_a$, $R_b$, $R_1$, $R_2$, $R_3$, $R_4$, $R_5$, Ar, $X^-$, PG, $R_6$ and $R_7$ are as defined in claims 11 and 12.

**18.** Use of a compound as defined in any of claims 1 to 8 as a soluble organic catalyst in a metal M-air battery cell.

**19.** A battery pack comprising at least two assembled metal M-air battery cells according to any of claims 1 to 12.

**20.** Use of a battery pack according to claim 19 as a rechargeable battery for electric vehicles and hybrid vehicles, electronic devices, and stationary power generating devices, and preferably devices related to mobility such as cars, bikes, scooters and drones.

**21.** A vehicle, an electronic device, and a stationary power generating device, comprising a battery pack according to claim 19.

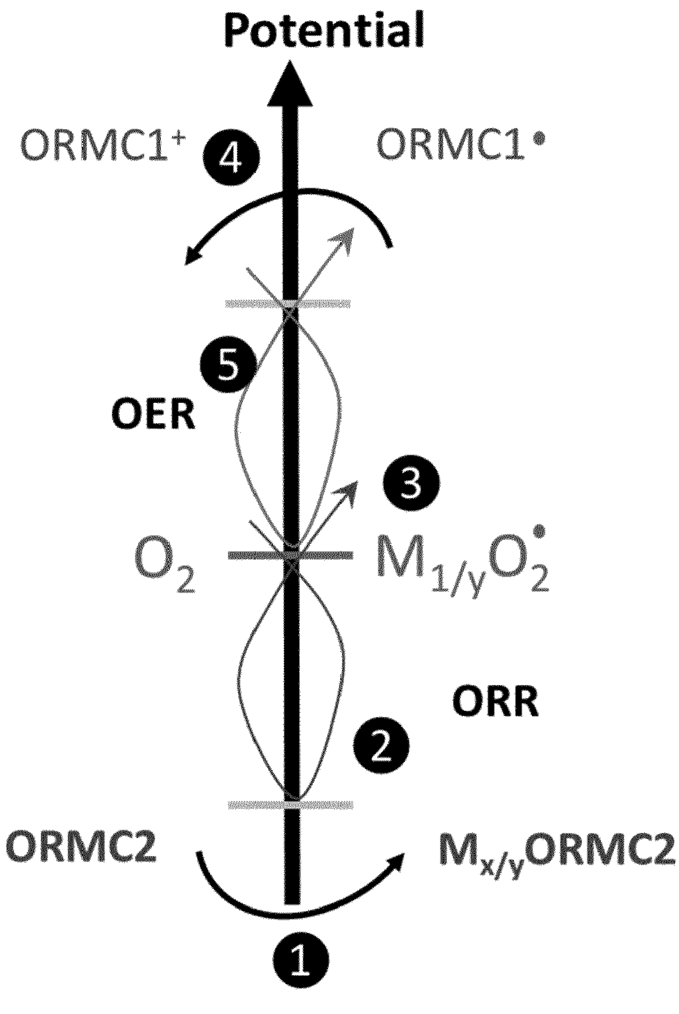
Potential
ORMC1+
4
ORMC1•
5
OER
3
O2
M1/yO2•
ORR
2
ORMC2
Mx/yORMC2
1

Figure 1

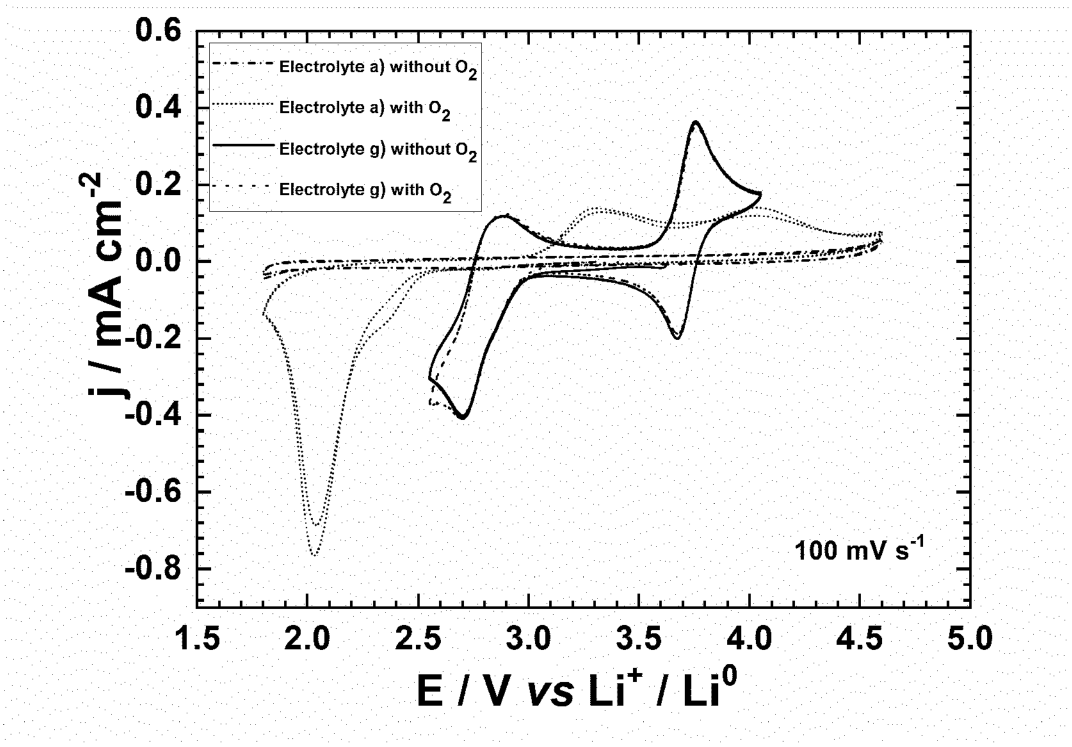

0.6
0.4
0.2
0.0
-0.2
-0.4
-0.6
-0.8
j / mA cm-2
Electrolyte a) without O2
Electrolyte a) with O2
Electrolyte g) without O2
Electrolyte g) with O2
100 mV s-1
1.5
2.0
2.5
3.0
3.5
4.0
4.5
5.0
E / V vs Li+ / Li0


**Figure 2**

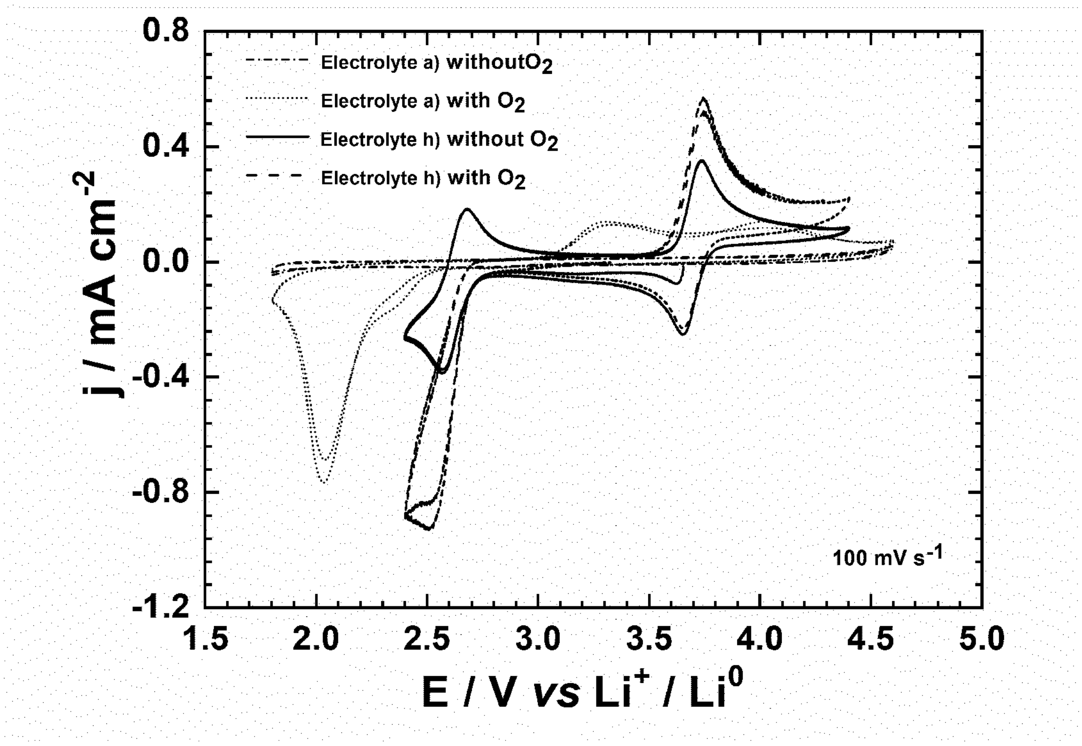
Electrolyte a) withoutO2
Electrolyte a) with O2
Electrolyte h) without O2
Electrolyte h) with O2
100 mV s-1
0.8
0.4
0.0
-0.4
-0.8
-1.2
1.5
2.0
2.5
3.0
3.5
4.0
4.5
5.0
j / mA cm-2
E / V vs Li+ / Li0

Figure 3

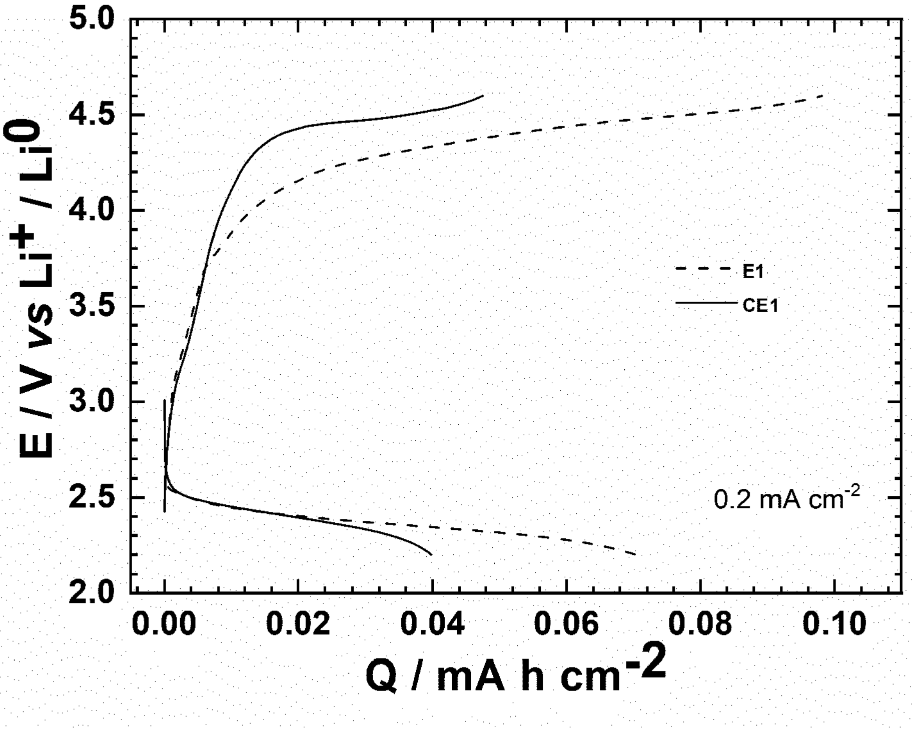
5.0
4.5
4.0
3.5
3.0
2.5
2.0
E / V vs Li+ / Li0
E1
CE1
0.2 mA cm-2
0.00
0.02
0.04
0.06
0.08
0.10
Q / mA h cm-2

**Figure 4**

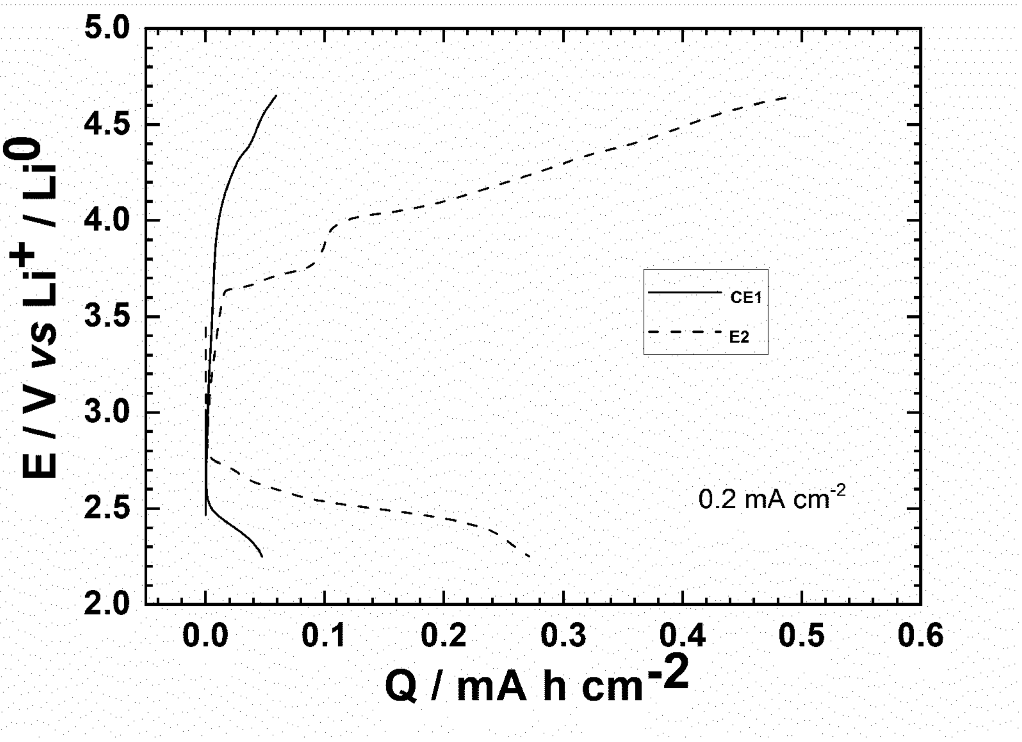
E / V vs Li+ / Li0
Q / mA h cm-2
CE1
E2
0.2 mA cm-2
5.0
4.5
4.0
3.5
3.0
2.5
2.0
0.0
0.1
0.2
0.3
0.4
0.5
0.6

Figure 5

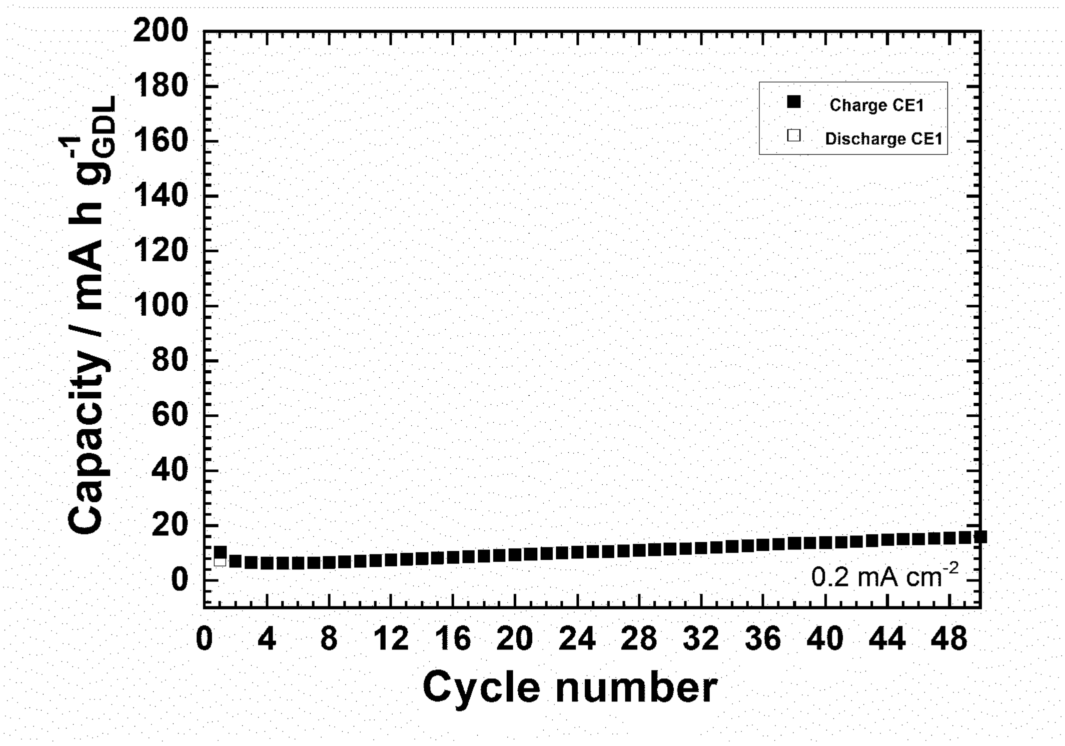
200
180
160
140
120
100
80
60
40
20
0
Capacity / mA h g-1GDL
Charge CE1
Discharge CE1
0.2 mA cm-2
0 4 8 12 16 20 24 28 32 36 40 44 48
Cycle number

**Figure 6**

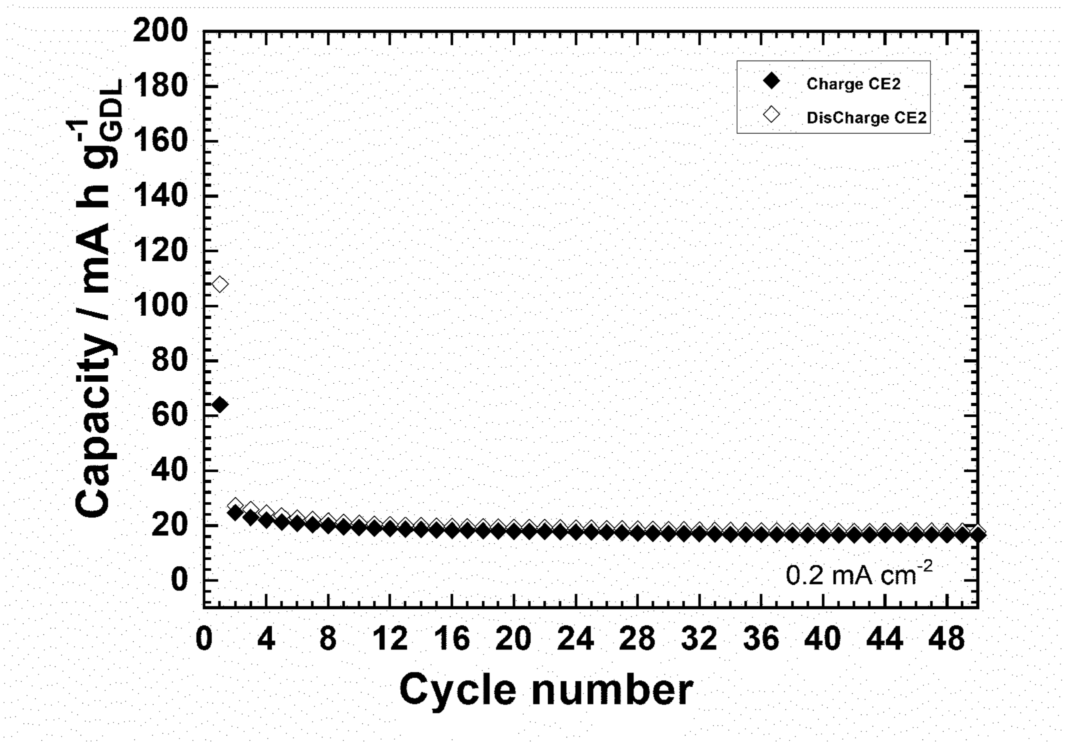
Capacity / mA h $g_{GDL}^{-1}$
200
180
160
140
120
100
80
60
40
20
0
Charge CE2
DisCharge CE2
0.2 mA $cm^{-2}$
0 4 8 12 16 20 24 28 32 36 40 44 48
Cycle number

**Figure 7**

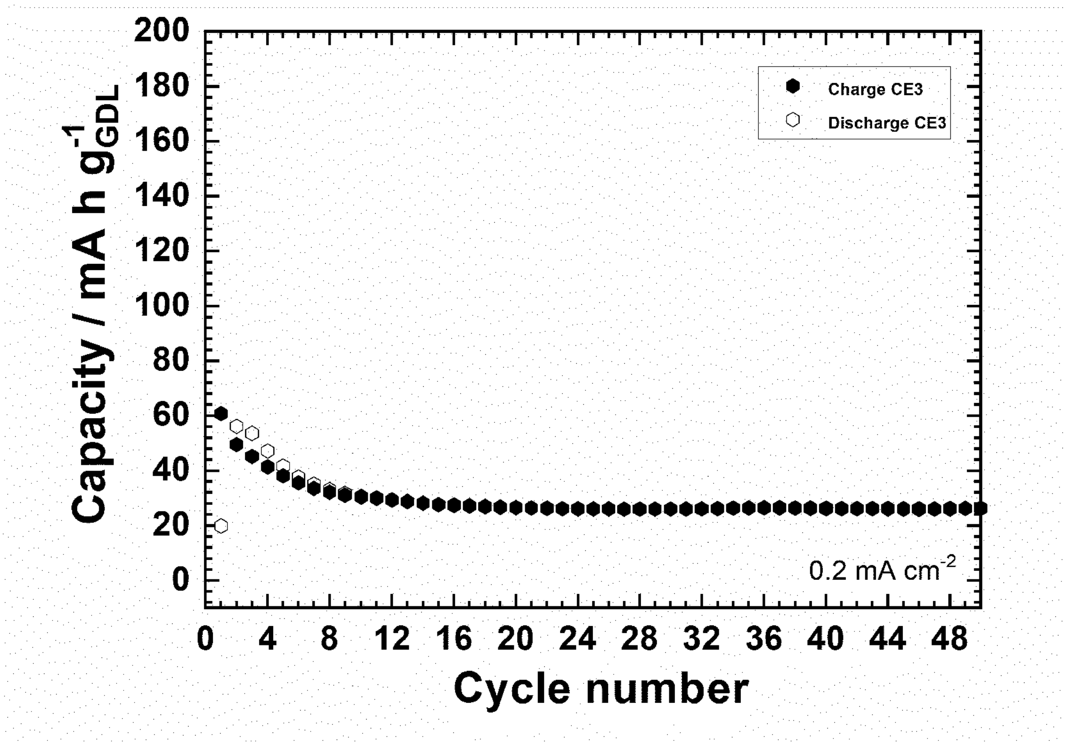
Capacity / mA h $g^{-1}_{GDL}$
200
180
160
140
120
100
80
60
40
20
0
Charge CE3
Discharge CE3
0.2 mA $cm^{-2}$
0 4 8 12 16 20 24 28 32 36 40 44 48
Cycle number

**Figure 8**

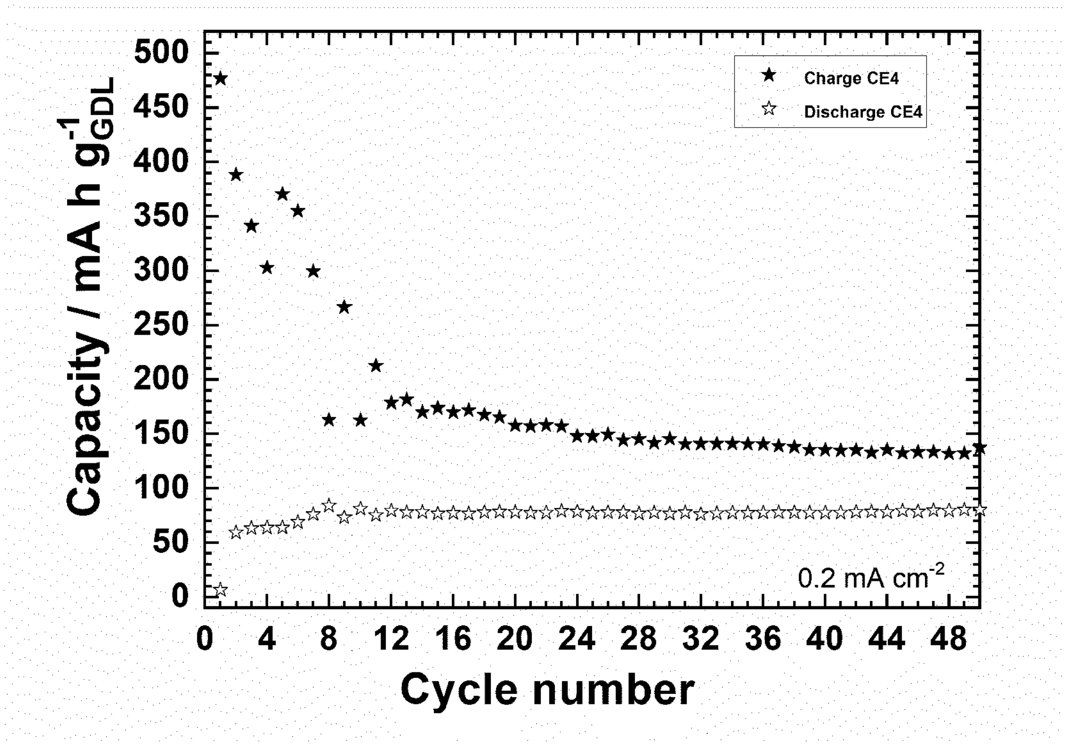
Capacity / mA h g$^{-1}_{GDL}$
0
50
100
150
200
250
300
350
400
450
500
Charge CE4
Discharge CE4
0.2 mA cm$^{-2}$
0
4
8
12
16
20
24
28
32
36
40
44
48
Cycle number

**Figure 9**

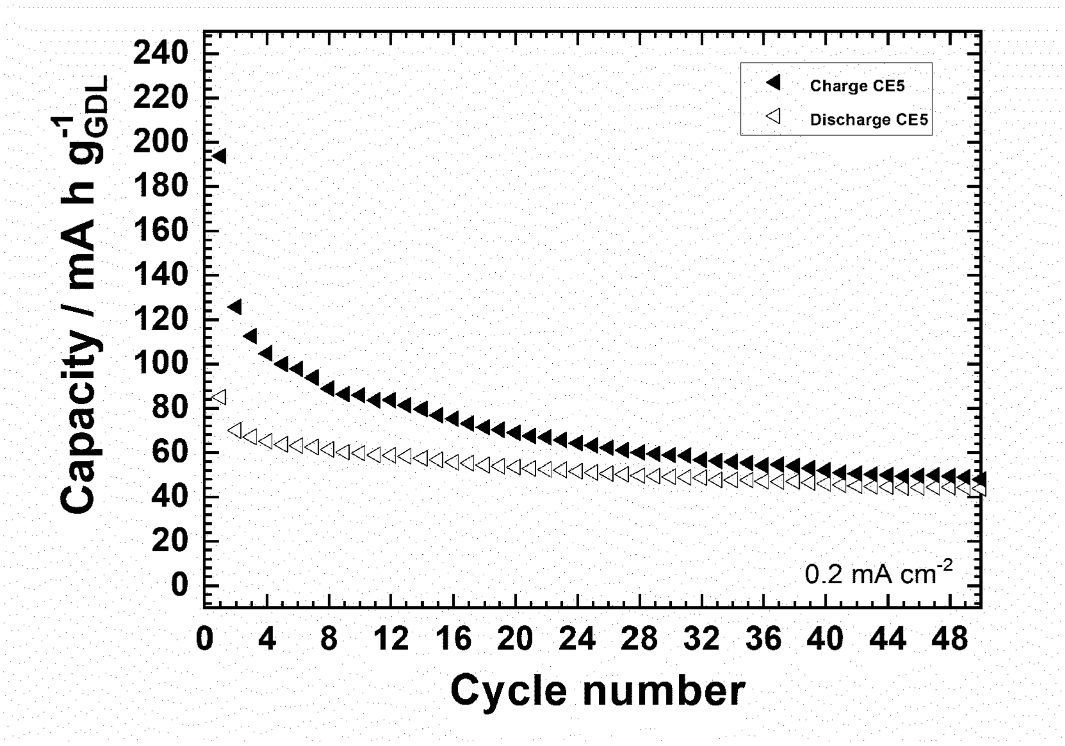
Capacity / mA h $g^{-1}_{GDL}$
240
220
200
180
160
140
120
100
80
60
40
20
0
0 4 8 12 16 20 24 28 32 36 40 44 48
Cycle number
Charge CE5
Discharge CE5
0.2 mA $cm^{-2}$

Figure 10

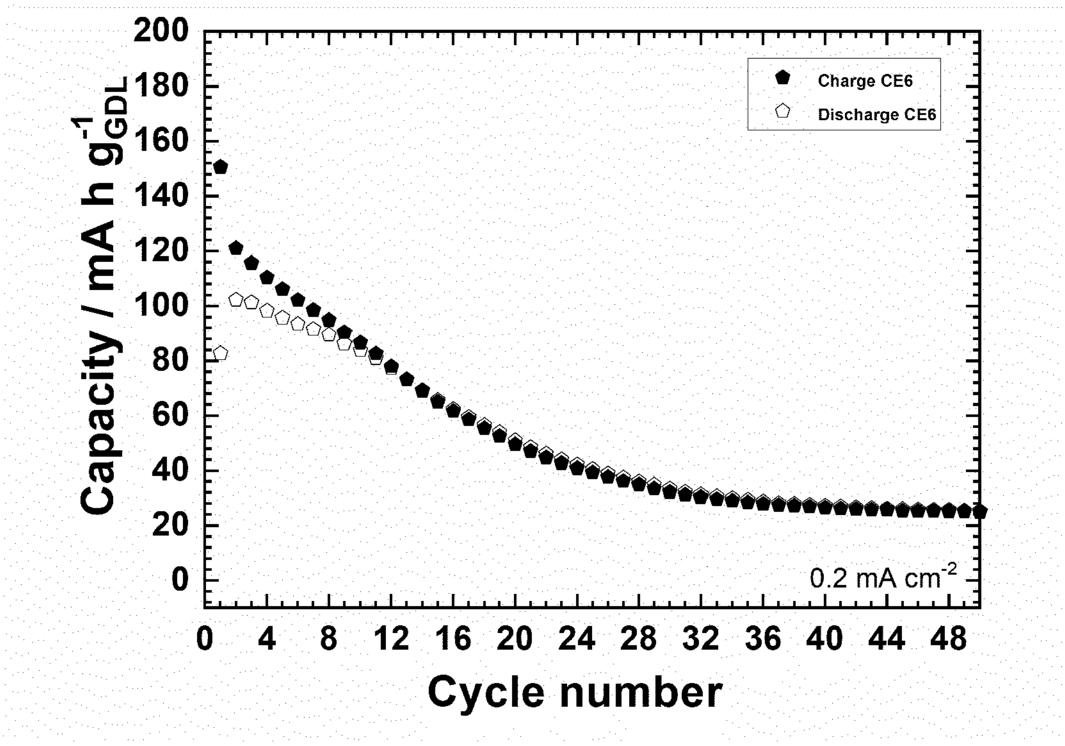
Capacity / mA h $g_{GDL}^{-1}$
200
180
160
140
120
100
80
60
40
20
0
Charge CE6
Discharge CE6
0.2 mA $cm^{-2}$
0 4 8 12 16 20 24 28 32 36 40 44 48
Cycle number

**Figure 11**

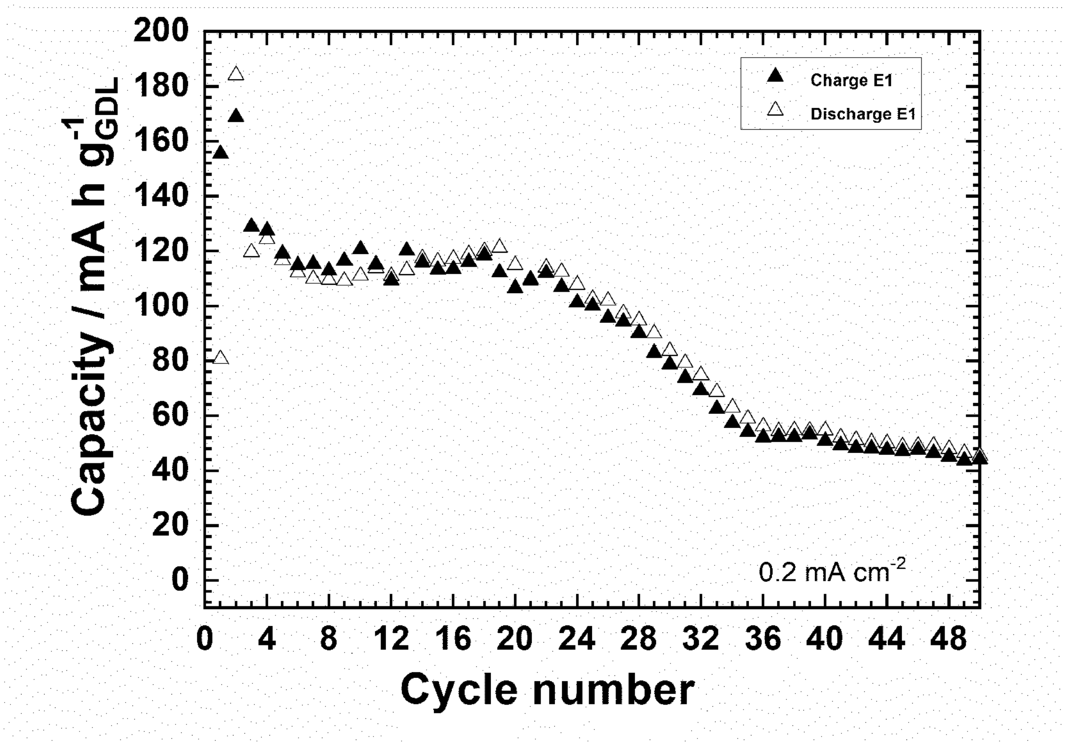
Capacity / mA h g$^{-1}_{GDL}$
Cycle number
Charge E1
Discharge E1
0.2 mA cm$^{-2}$
200
180
160
140
120
100
80
60
40
20
0
0
4
8
12
16
20
24
28
32
36
40
44
48

**Figure 12**

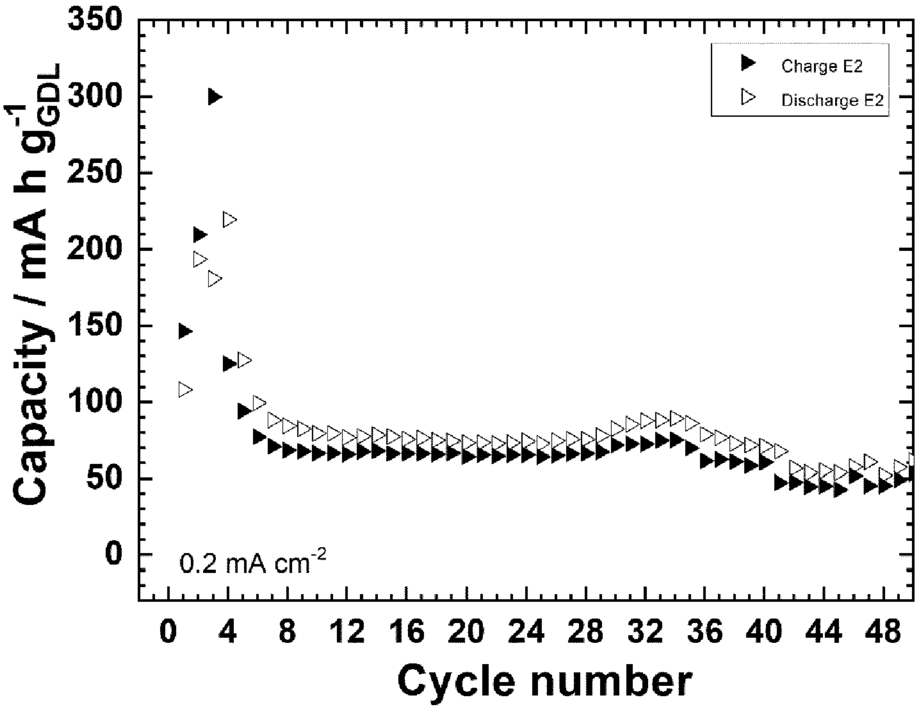
Capacity / mA h $g_{GDL}^{-1}$
350
300
250
200
150
100
50
0
Charge E2
Discharge E2
0.2 mA $cm^{-2}$
0 4 8 12 16 20 24 28 32 36 40 44 48
Cycle number

**Figure 13**

Europäisches Patentamt
European Patent Office
Office européen des brevets

# EUROPEAN SEARCH REPORT

Application Number
EP 22 30 5821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2019 0081377 A (HYUNDAI MOTOR CO LTD [KR]; SEOUL NAT UNIV R&DB FOUNDATION [KR] ET AL.) 9 July 2019 (2019-07-09)<br>* abstract *<br>* claims 1-10 *<br>* paragraphs [0002] - [0018] *<br>----- | 1-21 | INV.<br>H01M10/0567<br>H01M10/42<br>H01M12/08 |
| A | BENJAMIN J. BERGNER ET AL: "TEMPO: A Mobile Catalyst for Rechargeable Li-O 2 Batteries",<br>JOURNAL OF THE AMERICAN CHEMICAL SOCIETY, vol. 136, no. 42,<br>22 October 2014 (2014-10-22), pages 15054-15064, XP055238448,<br>ISSN: 0002-7863, DOI: 10.1021/ja508400m<br>* abstract *<br>* paragraph [0002] *<br>----- | 1-21 | |
| A | US 2013/137002 A1 (LEE DONG-JOON [KR] ET AL) 30 May 2013 (2013-05-30)<br>* abstract *<br>* claims 1-21 *<br>----- | 1-21 | TECHNICAL FIELDS SEARCHED (IPC)<br>H01M |

The present search report has been drawn up for all claims

1

| Place of search | Date of completion of the search | Examiner |
|---|---|---|
| Munich | 14 December 2022 | Stachowiak, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 30 5821

This annex lists the patent family members relating to the patent documents cited in the above-mentioned European search report. The members are as contained in the European Patent Office EDP file on
The European Patent Office is in no way liable for these particulars which are merely given for the purpose of information.

14-12-2022

| Patent document cited in search report | Publication date | Patent family member(s) | Publication date |
|---|---|---|---|
| KR 20190081377 A | 09-07-2019 | NONE | |
| US 2013137002 A1 | 30-05-2013 | KR 20130060912 A | 10-06-2013 |
| | | US 2013137002 A1 | 30-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2495803 A1
- KR 20190123075 A
- US 10497976 B2
- US 8652692 B
- US 7282295 B
- US 7491458 B
- EP 1096591 A1
- US 20100266907 A


### Non-patent literature cited in the description


- **S. NAKATSUJI et al.** *Mol. Cryst. Liq. Cryst.,* 1996, vol. 279, 73-76
- **M. NOBUSAWA et al.** *Letters in Organic Chemistry,* 2006, vol. 3, 685-688
- **S. NAKATSUJI et al.** *J. Org. Chem.,* 2009, vol. 74, 9345-9350
- *Nature Materials,* 2011, vol. 10, 682-686
- **SONG et al.** *Journal of Power Sources,* 1999, vol. 77, 183-197
- **CROCE et al.** *Electrochimica Acta,* 2001, vol. 46, 2457-2461
- **SWIERCZYNSKI et al.** *Chem. Mater.,* 2001, vol. 13, 1560-1564